# EUROPÄISCHE PATENTSCHRIFT

(11) **EP 2 797 043 B1**
(45) Veröffentlichungstag und Bekanntmachung des Hinweises auf die Patenterteilung: **29.06.2016**
(21) Anmeldenummer: 14159205.5
(22) Anmeldetag: 12.03.2014
(51) Int. Cl.: G06F 21/44, G06Q 20/34, G06Q 20/22, G06Q 20/38, G06Q 20/40

(54) **DURCHFÜHRUNG EINER CHIPKARTENFUNKTION**
EXECUTION OF A CHIP CARD FUNCTION
RÉALISATION D'UNE FONCTION DE CARTE À PUCE

(30) Priorität: 24.04.2013 DE 102013207477
(43) Veröffentlichungstag der Anmeldung: 29.10.2014
(73) Patentinhaber: Bundesdruckerei GmbH, 10958 Berlin (DE)
(72) Erfinder: Morgner, Frank, 15537 Grünheide (DE); Kullkovska, Olga, 14165 Berlin (DE)
(74) Vertreter: Richardt Patentanwälte PartG mbB

(56) Entgegenhaltungen:
- EP-A1- 1 465 092
- EP-A1- 2 405 409
- WO-A1-01/61918
- WO-A1-02/088991
- ES-A1- 2 153 324
- JP-A- H10 198 776
- US-A1- 2002 107 798
- EDWARD SUH G ET AL: "Physical Unclonable Functions for Device Authentication and Secret Key Generation", 2007 44TH ACM/IEEE DESIGN AUTOMATION CONFERENCE : SAN DIEGO, CA, 4 - 8 JUNE 2007, IEEE, PISCATAWAY, NJ, 1. Juni 2007 (2007-06-01), Seiten 9-14, XP031183294, ISBN: 978-1-59593-627-1
- JESS LZARO ET AL: "I2CSec: A secure serial Chip-to-Chip communication protocol", JOURNAL OF SYSTEMS ARCHITECTURE, ELSEVIER BV, NL, Bd. 57, Nr. 2, 10. Dezember 2010 (2010-12-10), Seiten 206-213, XP028136364, ISSN: 1383-7621, DOI: 10.1016/J.SYSARC.2010.12.001 [gefunden am 2010-12-30]

## Beschreibung

Die Erfindung betrifft ein Verfahren zur Durchführung einer Chipkartenfunktion durch einen ersten und/oder zweiten Chip einer Chipkarte sowie eine entsprechende Chipkarte. Bei der Übertragung von Daten sollte eine Möglichkeit vorhanden sein, Veränderungen an diesen Daten zu erkennen. Gerade bei der Speicherung von sensiblen oder sicherheitsrelevanten Daten oder bei der Übertragung von Daten zur Ausführung sicherheitskritischer Programme und Funktionen müssen diese gegenüber Veränderungen abgesichert sein um sicherzustellen, dass die übertragenen Daten bzw. ein auf diesen basierender Programmablauf unverfälscht sind. Zu den sensiblen Daten gehören etwa Programmcodes und Funktionsaufrufe, Schlüssel, Zugriffsbedingungen, Zeigerstrukturen und ähnliches. Zur Sicherstellung der Datenintegrität werden häufig Fehlererkennungscodes, die auch als EDC (error detection code) bezeichnet werden, verwendet. Diese geben den zu schützenden Daten eine Prüfisumme bei, der mit einem allgemein bekannten, also nicht geheimen, Algorithmus berechnet wird.

Nachteilig an diesen Verfahren ist, dass sie keinen wirksamen Schutz vor bewusster Manipulation der Daten bieten.

Die Patentanmeldung WO 01/61918 A1 beschreibt ein Validierungsprotokoll um festzustellen, ob ein Authentifizierungs-Chip, dem nicht vertraut wird, valide ist oder nicht. Das Protokoll kann dazu verwendet werden um festzustellen, ob ein solider Authentifizierungschip physisch präsent ist. In diesem Fall kann ein System den vertrauenswürdigen Chip dazu veranlassen, eine Zufallszahl zu generieren und zu signieren, die designierte Zufallszahl zu verschlüsseln mit einem ersten Schlüssel und dann in einem anderen, nicht vertrauten Chip, eine Validierungsfunktion aufzurufen. Die Validierungsfunktion entschlüsselt die Zufallszahl und die Signatur, berechnet eine andere Signatur von der entschlüsselten Zufallszahl um diese mit der entschlüsselten Zufallszahl zu vergleichen. Wenn der Vergleich erfolgreich verläuft wird die Zufallszahl mit einem anderen Schlüssel verschlüsselt und zurückgeschickt. Schließlich wird eine Testfunktion in dem vertrauenswürdigen Chip aufgerufen um mittels eines zweiten Schlüssels seine eigene verschlüsselte Version der Zufallszahl zu generieren und dann die eigene entschlüsselte Version der Zufallszahl mit der empfangenen Version zu vergleichen um dem nicht vertrauenswürdigen Chip zu validieren.

Die Publikation "Physical Unclonable Functions for Device Authention and Secret Key Generation", 2007, Edward Suh et al.: 44th ACM/IEEE Design automation conference, San Diego, beschreibt ein sicheres Protokoll für eine Chip zu Chip Kommunikation basierend auf einem AES-GCM Kryptographieprotokoll.

EP 2405409 A1 beschreibt die Personalisierung eines elektronischen Dokuments mit mehreren Prozessoren.

Patentanmeldung US 2002/0107798 A1 beschreibt die Sicherung einer PräInitialisierungsphase einer Smartcard mittels einer gegenseitigen Authentifizierung dieser Karte und eines Sicherheitsgeräts. Die Karte beinhaltet einen privaten, symmetrischen Schlüssel und einen öffentlichen asymmetrischen Schlüssel. Das Sicherheitsgerät beinhaltet den gleichen privaten symmetrischen Schlüssel und den privaten asymmetrischen Schlüssel, der zu dem öffentlichen asymmetrischen Schlüssel der Karte gehört. Karte und Sicherheitsgerätes stellen Zufallszahlen bereit. Das Sicherheitsgerät wird dadurch authentisiert, dass es ein Kryptogramm an die Karte übermittelt, welches von zwei Zufallszahlen mittels eines asymmetrischen kryptografischen Verfahrens abgeleitet ist.

Bei Chipkarten mit mehreren miteinander Daten austauschenden Chips, sogenannten "hybriden" Chipkarten, besteht somit die Gefahr, dass ein Dritter, der zumindest vorübergehend in den Besitz der Chipkarte gelangt ist, durch Austauschen eines oder mehrerer Chips die Chipkarte so manipuliert, dass eine sicherheitskritische Chipkartenfunktion auch dann durchgeführt wird, wenn bestimmte Sicherheitsanforderungen nicht mehr erfüllt sind. So könnte z.B. ein manipulierter Chip, der anstelle des ursprünglichen Chips in die Karte verbracht wurde, sensible Daten im Hintergrund aus einem Speicher der Chipkarte oder eines anderen Chips der Chipkarte auslesen und an unberechtigte Dritte weitergeben oder eine solche Weitergabe veranlassen. Ein solcher Chip könnte auch manipulierte Daten an andere Komponenten der Chipkarte (z.B. andere Chips) übermitteln, so dass die Chipkarte ihre eigentliche Funktion (Zahlungsmittel, Ausweis, Identitätsnachweis, Wertdokument etc.) nicht mehr bestimmungsgemäß und korrekt ausführen kann. Dies birgt die Gefahr enormer wirtschaftlicher Schäden für den Kartennutzer und/oder für dessen Geschäftspartner.

Demgegenüber liegt der Erfindung die Aufgabe zu Grunde, ein verbessertes Verfahren zur Durchführung einer Chipkartenfunktion bereitzustellen.

Diese Aufgabe wird jeweils mit den Merkmalen der unabhängigen Patentansprüche gelöst. Ausführungsformen der Erfindung sind in den abhängigen Patentansprüchen angegeben. Sofern nicht ausdrücklich Gegenteiliges zum Ausdruck gebracht wird, können Ausführungsformen der Erfindung frei miteinander kombiniert werden.

Unter einem "Chip" oder "Mikrochip" wird im Folgenden ein integrierter Schaltkreis verstanden, der mehrere elektronische Bauteile bzw. Schaltungselemente wie Transistoren, Widerstände usw. enthalten kann. Je nach Ausführungsform kann ein Chip Bestandteil von Computern, Niobilfunkgeräten, insbesondere Smartphones, Digitalkameras oder anderer, z.B. portabler, Geräte sein. Ein Chip kann auch Bestandteil einer Chipkarte sein, wobei die Chipkarte noch ein oder mehrere weitere Chips enthalten kann. Die Chips können miteinander verbunden sein um Daten auszutauschen. Die Chips einer Chipkarte können einzeln oder interoperativ eine oder mehrere Chipkartenoperationen durchführen.

Als "Chipkarte" oder "Dokument" wird im Folgenden jeglicher Datenträger bezeichnet, welcher einen oder mehrere Chips aufweist. Der Chip kann eine mit diesem verbundene Antenne aufweisen. Vorzugsweise kann die Chipkarte mit einem geeigneten Lesegerät Daten austauschen. Bei der Chipkarte kann es sich um ein Wert- oder Sicherheitsdokument, zum Beispiel ein ID-Dokument, handeln. Ein ID-Dokument kann z.B. ein Ausweisdokument, wie zum Beispiel einen Personalausweis, Reisepass, Führerschein, Fahrzeugbrief, Fahrzeugschein oder Firmenausweis sein. Bei dem Wertdokument kann es sich z.B. um ein Zahlungsmittel wie zum Beispiel eine Banknote oder eine Kreditkarte handeln. Das Dokument kann auch ein sonstiger Berechtigungsausweis, zum Beispiel eine Eintrittskarte, ein Fahrschein, insbesondere ein Electronic-Ticket, einen Frachtbrief, ein Visum oder dergleichen, sein. Der Dokumentkörper des Dokuments kann buchartig ausgebildet sein, wie dies zum Beispiel bei einem Reisepass der Fall sein kann. Je nach Ausführungsform kann die Chipkarte zum Beispiel kunststoff- und/oder papierbasiert sein. Aus der DE 201 00 158 U1 ist beispielsweise eine Identifikations- und Sicherheitskarte aus laminierten und/oder gespritzten Kunststoffen bekannt, die einen integrierten Halbleiter mit einer Antenne zur Durchführung eines RFID-Verfahrens beinhaltet. Unter einer Chipkarte wird auch ein sogenanntes Funketikett verstanden, welches auch als RFID-Tag oder RFID-Label bezeichnet wird. Eine Chipkarte kann eine Schnittstelle zum kontaktlosen Datenaustausch z.B. mit einem Lesegerät und/oder eine kontaktbehaftete Schnittstelle beinhalten.

Unter einer "physical unclonable funktion" oder "PUF" ist eine Funktion zu verstehen, die in einer physikalischen Struktur (insbesondere eine Mikrostruktur) ausgebildet ist. Vorzugsweise ist diese Funktion einfach ausführbar bzw. anwendbar. Die der PUF zu Grunde liegende physische Struktur ist jedoch nur sehr schwer bis unmöglich gezielt herstellbar. Unter dem Ausdruck "Material, das eine PUF bildet" ist im Folgenden vorzugsweise Material zu verstehen, welches selbst vom Hersteller dieses Materials nicht mehr in gleichartiger Weise reproduziert werden kann. Zum Beispiel kann die PUF mittels einer herstellungstechnischen "Einwegfunktion" (POF - "physical one way function") hergestellt worden sein bzw. kann ein Kartenmaterial verwendet werden, welches bereits von vornherein eine entsprechende PUF ausbildende Struktur enthält. Je nach Ausführungsform können PUFs auf optischen, elekto-magnetischen oder anderen Eigenschaften des Materials beruhen.

Wenn ein physikalischer Stimulus an eine PUF-Struktur angelegt wird, kann die physikalische Struktur der PUF auf deterministische aber nach heutigem Stand der Technik unvorhersehbare (nicht modellierbarer bzw. nicht berechenbarer) Weise den Stimulus modifizieren. Die Interaktion des Stimulus mit der physikalischen Struktur des Materials kann sehr komplex sein. Die exakte Struktur kann z.B. von physikalischen Faktoren bei der Herstellung abhängen, die nicht vorhersehbar sind, z.B. eine statistische Verteilung von Partikeln innerhalb des (noch nicht erhärteten) Kartenmaterials. Die statistische Verteilung kann durch einen Mischungsprozess von Kartengrundsubstanz und den Partikeln, die den Stimulus modulieren, bedingt sein, wobei die Kartengrundsubstanz beispielsweise durch Polymerisation der Grundsubstanz die statistische Verteilung der Partikel an einem bestimmten Zeitpunkt bleibend fixiert. Der angelegte Stimulus kann von einem Sensor sensiert werden und als Input für eine Datenverarbeitungsoperation dienen.

Unclonability (Nichtkopierbarkeit) bedeutet vorzugsweise physikalische und mathematische Nichtkopierbarkeit. Physikalische Nichtkopierbarkeit bedeutet, dass es unmöglich ist, eine bestimmte PUF Struktur in gleicher Form auf einem anderen physischen Trägermaterial zu reproduzieren. Mathematische Nichtkopierbarkeit bedeutet, dass es unmöglich ist, mathematisch/computertechnisch den Stimulus in seiner durch die PUF modifizierten Form, wie er vom Sensor empfangen wird, vorherzusagen bzw. zu berechnen.

Typischerweise ist die Interaktion des Stimulus mit der Struktur des Materials zu komplex, um daraus die Modifikation des Stimulus vorhersagen zu können. Der Stimulus kann z.B. ein Signal sein, z.B. ein optisches Signal. Die Kombination von physikalischen und mathematischen Nichtkopierbarkeit macht eine PUF besonders sicher und "unkopierbar". Eine "PUF bezüglich eines Sensorelements" ist also eine Modifikation eines durch ein Sensorelement empfangenen Stimulus durch das die PUF bildende Material, wobei die Modifikation mit den derzeit verfügbaren Mitteln der Technik weder physikalisch reproduziert noch mathematisch vorherberechnet werden kann.

Eine PUF ist zeitlich nicht variabel, d.h., unabhängig vom Zeitpunkt der Applikation des Stimulus ist das von der PUF zurückgegebene Signal bei gleichbleibendem Stimulus ebenfalls das gleiche.

Unter dem Begriff "Authentisierung" soll im Folgenden die Erbringung eines Nachweises einer behaupteten Eigenschaft einer ersten Partei gegenüber einer zweiten Partei in Kombination mit der Prüfung dieses Nachweises und Akzeptanz der Echtheit der behaupteten Eigenschaft durch die zweite Partei verstanden werden. Der Einfachheit halber soll hier also nicht zwischen Authentifizierung und Authentisierung im engeren Sinne differenziert werden.

In einem Aspekt betrifft die Erfindung ein Verfahren zur Durchführung einer Chipkartenfunktion die von einem ersten und/oder einem zweiten Chip bereitgestellt wird. Der erste und der zweite Chip sind Bestandteil einer Chipkarte, deren Kartenmaterial den ersten und den zweiten Chip trägt. Einen Chip zu "tragen" bedeutet, dass der Chip z.B. auf der Oberfläche des Kartenmaterials befestigt, z.B. aufgeklebt, sein kann. Der Chip kann aber auch ganz oder teilweise in das Kartenmaterial eingebettet sein, so dass er von außen nicht oder nur teilweise sichtbar ist.

Das Kartenmaterial bildet eine erste Physical Unclonable Function (PUF) bezüglich eines Sensorelements des ersten Chips. Dieses Sensorelement wird im Folgenden als "erstes Sensorelement" bezeichnet. Das Verfahren umfasst:
a1) Empfang eines ersten Signals, das durch die erste PUF bestimmt ist, durch das erste Sensorelement;
b1) Ableitung eines ersten kryptographischen Schlüssels durch den ersten Chip aus dem ersten Signal; dies kann z.B. durch eine Schlüsselableitungsfunktion geschehen, welche das erste Signal als Input verwendet.
c1) Authentisierung des ersten Chips gegenüber dem zweiten Chip mit Hilfe des ersten kryptographischen Schlüssels;
d) Aufbau eines kryptographisch geschützten Datenübertragungskanals zwischen erstem und zweiten Chip; und
e) Datenaustausch zwischen dem ersten und zweiten Chip über den Datenübertragungskanal zur Durchführung der Chipkartenfunktion.

Die Chipkartenfunktion wird also nur ausgeführt, wenn sich der erste Chip gegenüber dem zweiten authentifiziert hat. Vorzugsweise kann die Authentifizierung mittels des von der ersten PUF abgeleiteten ersten kryptographischen Schlüssels erfolgen. Somit kann die Ausführung der Chipkartenfunktion vor Manipulation und vor dem Zugriff durch unberechtigte Dritte geschützt werden, da ein Versuch, den ersten Chip mit dem ersten Sensorelement durch einen anderen, manipulierten Chip zu ersetzen, zu einer Veränderung der ersten PUF, über welche der erste Sensor das erste Signals empfängt, führen würde. Durch eine Manipulation der ersten PUF würde also das empfangene erste Signal und der von diesem abgeleitete kryptographische Schlüssel verändert werden und der erste Chip würde sich nicht mehr erfolgreich gegenüber dem zweiten Chip authentisieren können. Das Verfahren kann also einen besseren Schutz vor Manipulation oder Austausch von Chipkartenkomponenten bieten, indem vorzugsweise die erste Signalquelle, der erste Sensor und die erste PUF so in der Chipkarte arrangiert werden, dass bei Manipulationsversuchen insbesondere am ersten oder zweiten Chip die erste PUF verändert wird.

Nach Ausführungsformen bildet das Kartenmaterial eine zweite PUF bezüglich eines Sensorelements des zweiten Chips. Dieses Sensorelement wird im Folgenden als "zweites Sensorelement" bezeichnet. Das Verfahren umfasst:
a2) Empfang eines zweiten Signals das durch die zweite Physical Unclonable Function bestimmt ist durch das zweite Sensorelement;
b2) Ableitung eines zweiten kryptographischen Schlüssels durch den zweiten Chip aus dem zweiten Signal;
c2) Authentisierung des zweiten Chips gegenüber dem ersten Chip mit Hilfe des zweiten kryptographischen Schlüssels.

Eine Ableitung eines kryptographischen Schlüssels kann z.B. über eine "Schfüsselableitungsfunktion" (englisch: key derivation function - KDF) erfolgen. Eine Schlüsselableitungsfunktion ist ein deterministischer Algorithmus um einen kryptographischen Schlüssel aus einem Datenwert abzuleiten. Wenn zwei Parteien den gleichen Datenwert und die gleiche Schlüsselableitungsfunktion verwenden erzeugen beide den gleichen kryptographischen Schlüssel. Das über die erste PUF empfangene erste Signal erzeugt also deterministisch den gleichen ersten kryptographischen Schlüssel. Zur Ableitung des kryptographischen Schlüssels aus dem Datenwert kann ein robuster Ableitungsalgorithmus verwendet werden, welcher aus einer Vielzahl ähnlicher Datenwerte einen einzigen kryptographischen Schlüssel ableitet.

Nach Ausführungsformen der Erfindung kann die Vielzahl ähnlicher Datenwerte aus einer Vielzahl über eine PUF empfangener Signale bestehen, die sich stark ähneln aber aufgrund von Schwankungen der Randbedingungen (z.B. Umgebungslicht, Grundrauschen der Sensorelemente) geringfügig voneinander unterscheiden. Als stark ähnlich können z.B. Signale mit einer Ähnlichkeit über 95%, vorzugsweise über 99% eines für das Signal jeweils angelegten Ähnlichkeitsmaßstabs gelten. Somit kann ein gegenüber dem Hintergrundrauschen der Sensoren robustes Verfahren zur sicheren Durchführung der Chipkartenfunktion bereitgestellt werden.

Nach Ausführungsformen erfolgt der Aufbau des kryptographisch geschützten Datenübertragungskanals mit Hilfe des ersten und/oder zweiten kryptographischen Schlüssels. Somit ist ein beidseitiger Nachweis, dass die erste und/oder zweite PUF unverändert geblieben ist, erforderlich, um die Chipkartenfunktion durchzuführen, so dass eine Manipulation der Chipkarte durch Substitution eines ihrer Chips verhindert werden kann bzw. mit dem Verlust der Funktionsfähigkeit der Chipkarte einhergeht.

Die Chipkarte kann beispielsweise eine erste Signalquelle in dem Kartenmaterial der Chipkarte oder an der Oberfläche des Kartenmaterials besitzen, wobei das Kartenmaterial zwischen der ersten Signalquelle und dem ersten Sensorelement einen ersten Signalübertragungskanal bildet. Das von der ersten Signalquelle emittierte Signal wird auf seinem Weg über den ersten Signalübertragungskanal durch die erste PUF auf zeitinvariante, deterministische, jedoch nicht gezielt erzeugbare Art und Weise modifiziert und als erstes Signal vom ersten Sensorelement empfangen.

Die Chipkarte kann eine zweite Signalquelle in ihrem Kartenmaterial oder an der Oberfläche des Kartenmaterials besitzen, wobei das Kartenmaterial zwischen der zweiten Signalquelle und dem zweiten Sensorelement einen zweiten Signalübertragungskanal bildet. Bei Ausführungsformen in welchen nur einer Signalquelle in der Chipkarte vorhanden ist fungiert die erste Signalquelle als die zweite Signalquelle. Das von der zweiten Signalquelle emittierte Signal wird auf seinem Weg über den zweiten Signalübertragungskanal durch die zweite PUF auf zeitinvariante, deterministische, jedoch nicht gezielt erzeugbare Art und Weise modifiziert und als das zweite Signal vom zweiten Sensorelement empfangen.

Der erste und/oder zweite Signalübertragungskanal kann als spezielle Struktur ausgebildet sein und z.B. aus Leiterbahnen zwischen Signalquelle und jeweiligem Sensor bestehen, wobei die Leiterbahn die Grundlage für die entsprechende PUF darstellt. Der erste und/oder zweite Signalübertragungskanal kann aber auch allein in dem räumlichen Anteil des gesamten Kartenmaterials, welche zwischen der Signalquelle und dem das Signal (in modifizierter Form) empfangenden Sensorelement liegt, bestehen, ohne dass dieser Signalübertragungskanal strukturell als solcher erkennbar ist bzw. als spezielle Struktur ausgebildet ist.

Nach Ausführungsformen erfolgt der Aufbau des kryptographisch geschützten Datenübertragungskanals nur nach erfolgreicher Authentisierung des ersten Chips gegenüber dem zweiten Chip und nach erfolgreicher Authentisierung des zweiten Chips gegenüber dem ersten Chip. Somit kann die Sicherheit weiter erhöht werden: wenn auch nur einer der beiden PUFs, über welche die beiden Chips bzw. deren Sensoren ein Signal empfangen, durch Manipulation an der Chipkarte verändert wurden, wird zumindest durch einen Chip ein anderer Datenwert anstatt des kryptographischen Schlüssels berechnet, so dass mit diesem eine gegenseitige Authentifizierung nicht mehr möglich ist. Dies kann nicht nur vor böswilliger Manipulation der Chipkarte schützen, sondern auch davor, dass z.B. durch mechanische Beschädigung der Karte ein Datenwert fehlerhaft ausgelesen wird, welcher die Logik der Chipkartenfunktion korrumpiert. Das Verfahren kann also auch der Qualitätskontrolle der Chipkartenfunktion dienen.

Nach Ausführungsformen ist in dem Chip, gegenüber welchem sich der andere Chip authentisiert, ein Referenzschlüssel geschützt gespeichert. Der Referenzschlüssel ist - z.B. im Falle eines symmetrischen Schlüsselpaares - identisch mit dem kryptographischen Schlüssel, welchen der sich authentisierenden Chip abgeleitet hat. Alternativ dazu bildet der Referenzschlüssel mit dem besagten abgeleiteten kryptographischen Schlüssel ein asymmetrisches kryptographisches Schlüsselpaar (asymmetrische Kryptographie). Letztere Variante kann vorteilhaft sein, weil der abgeleitete kryptographische Schlüssel nirgendwo bleibend gespeichert werden muss. Aus dem öffentlichen Referenzschlüssel, der gespeichert wird, kann im Gegensatz zu einem symmetrischen Referenzschlüssel nämlich nicht auf den abgeleiteten kryptographischen Schlüssel zurückgeschlossen werden.

Nach Ausführungsformen basiert die Herstellung oder Personalisierung der Chipkarte auf symmetrischer Kryptographie und umfasst folgende Schritte:
- Durchführung der Schritte a1-b1);
- Speichern des ersten kryptographischen Schlüssels als ersten Referenzschlüssel in einem geschützten Speichermedium des zweiten Chips, wobei der erste Referenzschlüssel und der erste kryptographische Schlüssel ein symmetrisches kryptographisches Schlüsselpaar bilden; und
- nach der Speicherung des ersten Referenzschlüssels, Löschen des ersten kryptographischen Schlüssels von dem ersten Chip.

Zusätzlich oder alternativ kann die Herstellung bzw. Personalisierung folgende Schritte umfassen:
- Durchführung der Schritte a2-b2);
- Speichern des zweiten kryptographischen Schlüssels als zweiten Referenzschlüssel in einem geschützten Speichermedium des ersten Chips, wobei der zweite Referenzschlüssel und der zweite kryptographische Schlüssel ein symmetrisches kryptographisches Schlüsselpaar bilden; und
- nach der Speicherung des zweiten Referenzschlüssels, Löschen des zweiten kryptographischen Schlüssels von dem zweiten Chip.

Nach Ausführungsformen basiert die Herstellung oder Personalisierung der Chipkarte auf einem asymmetrischen kryptographischen Schlüsselpaar und umfasst folgende Schritte:
- Durchführung der Schritte a1-b1);
- Speichern eines ersten Referenzschlüssels in einem Speichermedium des zweiten Chips oder einem dem zweiten Chip zugänglichen externen Speichermedium, wobei der erste Referenzschlüssel und der erste kryptographische Schlüssel ein asymmetrisches kryptographisches Schlüsselpaar bilden, wobei der erste Referenzschlüssel als öffentlicher Schlüssel fungiert; und
- nach der Speicherung des ersten Referenzschlüssels, Löschen des ersten kryptographischen Schlüssels, so dass dieser in keinem Speichermedium der Chipkarte oder des ersten oder zweiten Chips gespeichert ist.

Das externe Speichermedium kann z.B. ein Server eines Zertifizierungsdienstanbieters sein, der ein Verzeichnis öffentlicher Schlüssel von bei diesem Dienst registrierten Personen öffentlich zur automatischen Abrufung durch entsprechende Client-Programme bereitstellt. Das Speichermedium des zweiten Chips, in dem der (öffentliche) erste Referenzschlüssel gespeichert wird, ist vorzugsweise zumindest im Hinblick auf Zugriffsmöglichkeiten durch den ersten Chip ungeschützt.

Zusätzlich oder alternativ kann die Herstellung bzw. Personalisierung folgende Schritte umfassen:
- Durchführung der Schritte a2-b2);
- Speichern eines zweiten Referenzschlüssels in einem Speichermedium des ersten Chips oder einem dem ersten Chip zugänglichen externen Speichermedium, wobei der zweite Referenzschlüssel und der zweite kryptographische Schlüssel ein asymmetrisches kryptographisches Schlüsselpaar bilden, wobei der zweite Referenzschlüssel als öffentlicher Schlüssel fungiert; und
- nach der Speicherung des zweiten Referenzschlüssels, Löschen des zweiten kryptographischen Schlüssels, so dass dieser in keinem Speichermedium der Chipkarte oder des ersten oder zweiten Chips gespeichert ist.

Das Speichermedium des ersten Chips, in dem der (öffentliche) zweite Referenzschlüssel gespeichert wird, ist vorzugsweise zumindest im Hinblick auf Zugriffsmöglichkeiten durch den zweiten Chip ungeschützt.
Der erste Referenzschlüssel kann vom ersten kryptographischen Schlüssel abgeleitet worden sein oder so gewählt werden, dass er mit diesem zusammen ein asymmetrisches kryptographisches Schlüsselpaar bildet. Analoges gilt für den zweiten Referenzschlüssel. Die Speicherung eines kryptographischen Schlüssels (und damit auch des Referenzschlüssels) kann die Speicherung des besagten kryptographischen Schlüssels selbst beinhalten oder die Speicherung von Daten, aus welchen mittels eines Algorithmus, der in dem die Speicherung vornehmenden Chip a priori gegeben ist, der kryptographische Schlüssel rekonstruierbar ist.

Nach Ausführungsformen signiert der erste Chip zur Authentisierung einen ersten Datenwert mit dem ersten kryptographischen Schlüssel und überträgt den signierten ersten Datenwert an den zweiten Chip. Dies ermöglicht dem zweiten Chip, eine Signaturprüfung des übertragenen signierten ersten Datenwerts mittels des ersten Referenzschlüssels durchzuführen. Zusätzlich oder alternativ signiert der zweite Chip zur Authentisierung einen zweiten Datenwert mit dem zweiten kryptographischen Schlüssel und überträgt den signierten zweiten Datenwert an den ersten Chip. Dies ermöglicht dem ersten Chip, eine Signaturprüfung des übertragenen signierten zweiten Datenwerts mittels des zweiten Referenzschlüssels durchzuführen.

Nach Ausführungsformen umfasst die Authentisierung des ersten Chips gegenüber dem zweiten Chip:
- Vereinbarung von Domänenparametern zwischen dem ersten und dem zweiten Chip;
- Generierung eines Zufallswerts, der als erster temporärer privater Schlüssel fungiert, durch den zweiten Chip;
- Ableitung eines ersten temporären öffentlichen Schlüssels aus dem ersten privaten temporären Schlüssel und zumindest einem der Domänenparameter durch den zweiten Chip, wobei der erste temporäre private und der erste temporäre öffentliche Schlüssel ein asymmetrisches kryptographisches Schlüsselpaar bilden;
- Übertragung des ersten temporären öffentlichen Schlüssels von dem zweiten Chip an den ersten Chip im Zuge eines ersten Diffie-Hellman-Schlüsselaustauschs;
- In Antwort auf die Übertragung des ersten temporären öffentlichen Schlüssels, Initiierung der Durchführung der Schritte a1-b1) und Verwendung des ersten kryptographischen Schlüssels durch den ersten Chip zur Signierung des übertragenen ersten temporären öffentlichen Schlüssels;
- Übertragung des signierten ersten temporären öffentlichen Schlüssels von dem ersten Chip an den zweiten Chip; und
- Signaturprüfung des signierten ersten temporären öffentlichen Schlüssels mit Hilfe des ersten Referenzschlüssels durch den zweiten Chip.
Der Aufbau der kryptographisch geschützten Verbindung umfasst eine Ableitung eines Sitzungsschlüssels aus dem ersten temporären öffentlichen Schlüssel durch den ersten Chip. Der Sitzungsschlüssel kann zur Verschlüsselung aller vom ersten Chip über den kryptographisch geschützten Datenübertragungskanal übertragenen Daten verwendet werden.

Nach Ausführungsformen umfasst die Authentisierung des zweiten Chips gegenüber dem ersten Chip:
- Generierung eines weiteren Zufallswerts der als zweiter temporärer privater Schlüssel fungiert durch den ersten Chip;
- Ableitung eines zweiten temporären öffentlichen Schlüssels aus dem zweiten privaten temporären Schlüssel und dem zumindest einem Domänenparameter durch den ersten Chip, wobei der zweite temporäre private und der zweite temporäre öffentliche Schlüssel ein asymmetrisches kryptographisches Schlüsselpaar bilden;
- Übertragung des zweiten temporären öffentlichen Schlüssels von dem ersten Chip an den zweiten Chip im Zuge des ersten Diffie-Hellman-Schlüsselaustauschs;
- In Antwort auf die Übertragung des zweiten temporären öffentlichen Schlüssels, Initiierung der Durchführung der Schritte a2-b2) und Verwendung des zweiten kryptographischen Schlüssels durch den zweiten Chip zur Signierung des übertragenen zweiten temporären öffentlichen Schlüssels;
- Übertragung des signierten zweiten temporären öffentlichen Schlüssels von dem zweiten Chip an den ersten Chip; und
- Signaturprüfung des signierten zweiten temporären öffentlichen Schlüssels mit Hilfe des zweiten Referenzschlüssels durch den ersten Chip.
Der Aufbau der kryptographisch geschützten Verbindung umfasst eine Ableitung des Sitzungsschlüssels aus dem zweiten temporären öffentlichen Schlüssel durch den zweiten Chip. Der Sitzungsschlüssel kann zur Verschlüsselung aller vom zweiten Chip über den kryptographisch geschützten Datenübertragungskanal übertragenen Daten verwendet werden.

Nach Ausführungsformen werden die Schritte a1-c1 und/oder a2-c2 für jede Durchführung der Chipkartenfunktion erneut durchgeführt. Somit ist für jede Durchführung der Chipkartenfunktion erforderlich, dass das erste und/oder zweite Sensorelement ein entsprechendes Signal über deren jeweilige PUF empfängt, so dass der erste und/oder zweite kryptographische Schlüssel abgeleitet werden kann. Der erste und/oder zweite kryptographische Schlüssel können dann gemäß mancher Ausführungsformen verwendet werden um eine einseitige oder beidseitige Chip-Chip Authentisierung und den Aufbau des kryptographisch gesicherten Datenübertragungskanals zu ermöglichen.

Nach Ausführungsformen stammt das erste Signal von einer ersten Signalquelle. Die erste Signalquelle und der erste Sensor sind relativ zueinander vorzugsweise so innerhalb der Chipkarte angeordnet, dass bei mechanischer, elektrischer, magnetischer, thermischer oder chemischer Modifikation des Kartenmaterials, das die erste PUF bildet, das erste Signal so modifiziert wird, dass ein anderer Datenwert als der erste kryptographische Schlüssel aus dem ersten Signal abgeleitet wird. Bei starker mechanischer Belastung der Karte, die an der ersten PUF zu einem Bruch oder Knick im der Chipkarte führt, durch Erhitzung, Verätzung oder anderweitige Beschädigung der Karte, und insbesondere bei bewusster Manipulation z.B. durch gewaltsames Entfernen eines der beiden Chips um diesen durch einen gefälschten Chip zu ersetzen, können also die beiden Chips keinen geschützten Kommunikationskanal mehr aufbauen, da der im jeweils anderen Chip gespeicherte Referenzschlüssel nicht mehr mit dem dynamisch aus der PUF abgeleiteten ersten bzw. zweiten kryptographischen Schlüssel kompatibel ist. So kann z.B. eine Signaturprüfung ergeben, dass der dynamisch abgeleitete kryptographische Schlüssel nicht mit dem im anderen Chip gespeicherten Referenzschlüssel kompatibel ist, so dass die Authentifizierung erfolglos abgebrochen wird und kein geschützter Datenübertragungskanal aufgebaut wird. In Folge dessen kann auch die Chipkartenfunktion nicht mehr ausgeführt werden. Bei der Chipkartenfunktion kann es sich um sicherheitskritische Funktionen (Auslesen persönlicher Daten, sicherheitskritische kryptographische Funktion, etc.) handeln. Die Schlüsselableitung aus einer PUF in Verbindung mit dem von diesem Schlüssel abhängigen Aufbau eines kryptographisch geschützten Datenübertragungskanals zum Auslösen der Chipkartenfunktion bietet also einen zuverlässigen Schutz vor Ausführung einer Chipkartenfunktion durch eine manipulierte Chipkarte.

Zusätzlich oder alternativ dazu sieht das Verfahren vor, dass das zweite Signal von dem zweiten Sensorelement des zweiten Chips empfangen wird. Das zweite Signal kann dabei von der ersten oder einer zweiten Signalquelle stammen. Für den Fall dass das zweite Signal ebenfalls von der ersten Signalquelle stammt, wird diese im Folgenden ebenfalls unter dem Begriff "zweite Signalquelle" subsummiert. Die zweite Signalquelle und der zweite Sensor sind relativ zueinander so innerhalb der Chipkarte angeordnet, dass bei mechanischer, thermischer oder chemischer Modifikation des Kartenmaterials, das die zweite PUF bildet, ein modifiziertes zweites Signal durch die veränderte zweite PUF erzeugt wird. Aus dem modifizierten zweiten Signal wird dann ein anderer Datenwert als der zweite kryptographische Schlüssel abgeleitet.

Somit kann das Verfahren geeignet sein, um verschiedene physisch miteinander gekoppelte Entitäten/Chips auch kryptografisch aneinander zu binden so dass eine Chipkartenfunktion eines der beiden oder beider Chips nur ausführbar ist wenn eine Manipulation der Chipkarte und der besagten Chips ausgeschlossen werden kann. Als Chips können z.B. Chips mit Temperatur-, Beschleunigungs-, (Luft)Druck-, Geruchs- oder Geschmackssensoren, aber auch Chips zur Kontrolle eines Displays oder einer Tastatur oder ein Sicherheitschip Verwendung finden.

Nach Ausführungsformen beinhaltet die Durchführung der Chipkartenfunktion eine oder mehrere der folgenden Schritte:
- Freigabe des geschützten Speichermediums der Chipkarte zur Ermöglichung des Auslesens geschützter Daten durch die Lokalisierungseinheit oder durch ein anderes datenverarbeitendes System; hierbei kann es sich beispielsweise um personenbezogene Daten des Nutzers handeln, für welchen die Karte personalisiert wurde, also etwa Adressdaten, Altersangaben, Bankkonten oder ähnliches; und/oder
- Aufzeichnung der Positionsdaten zum Zwecke des Protokollierens einer Bewegungsspur der Chipkarte; diese Protokolle bzw. Bewegungsspuren können für verschiedene Einsatzgebiete wie etwa Mautsysteme, für die Protokollierung von Wanderstrecken oder Fahrtwegen etc. verwendet werden; und/oder
- Durchführung einer elektronischen Transaktion, insbesondere einer Banktransaktion; dies kann z.B. eine Zahlung von Waren an einer Kasse, einen Eintritt bei einer Veranstaltung etc. umfassen; und/oder
- elektronischer Fahrscheinkauf oder automatische Erhebung einer Maut basierend auf den Positionsdaten; und/oder
- Freigabe einer blockierten Funktionalität einer Hardware, welche mit der Chipkarte operational verbunden ist "Operational verbunden" kann beinhalten, dass der Chip die Hardwarekomponente z.B. über entsprechende Kontrollbefehle steuert und/oder der Chip Daten von dieser Hardwarekomponente (z.B. Temperatursensor) empfängt. Bei der Hardwarefunktionalität kann es sich insbesondere handeln um:
   - einen Entsicherungsmechanismus einer Schusswaffe; dies kann vorteilhaft sein, da eine Waffe dann z.B. nur in der unmittelbaren Nähe von ein oder mehreren Schießständen, die mit einer speziellen Lokalisierungseinheit ausgestattet sind, einsatzfähig sind; die Möglichkeiten eines Missbrauchs insb. privat genutzter Handfeuerwaffen kann so deutlich reduziert werden;
   - um den Auslösemechanismus einer Explosionsvorrichtung;
   - einen Mechanismus zum Mischen von Flüssigkeiten, und/oder Substanzen; dies kann z.B. sicherstellen, dass gefährliche, etwa zu Explosionen neigende Substanzen, nur innerhalb eines besonders gesicherten Bereiches in der Umgebung einer entsprechenden Lokalisierungseinheit verarbeitet bzw. miteinander gemischt werden können;
   - eine mechanische Bewegung der Hardware oder einer ihrer Komponenten, insbesondere das Schließen oder Öffnen eines elektronischen Schaltkreises oder das Schließen oder Öffnen einer Verschlussvorrichtung (Tür, Verschluss eines Behältnisses, Zugangsschranke zu einem geographischen Gebiet, Verschlussvorrichtung eines Bauteils oder einer Gerätekomponente etc.) oder die Ausgabe eines Warn- oder Bestätigungssignals.

Nach Ausführungsformen umfassen die Materialeigenschaften, die die erste und/oder zweite PUF bilden: einen Aufdruck auf die Karte; eine inhomogene Verteilung von Materialeigenschaften; die Größe und/oder Position von Partikeln innerhalb des Kartenmaterials, das die erste und/oder zweite PUF bildet. Die Materialeigenschaften des Kartenmaterials, die die PUF bilden, können dabei ein oder mehrere der folgenden Eigenschaften des Materials bzw. der in dem Material befindlichen Partikel umfassen: i) elektrische, ii) dielektrische, iii) magnetische, oder iv) optische Eigenschaften. So können beispielsweise positiv oder negativ geladene Partikel in einem ungeladenen Kartenmaterial eingebettet sein. Bei mechanischer Deformation/Beschädigung des Kartenmaterials ändert sich die Position dieser Artikel innerhalb des Kartenmaterials und damit deren dielektrische Eigenschaften. Alternativ oder zusätzlich können lichtstreuende Partikel in einem weitgehend transparenten oder zumindest für den Frequenzbereich des gestreuten Lichts transparenten Kartenmaterial eingebettet sein. Alternativ oder zusätzlich können magnetische Partikel in einem nicht-magnetischen Material eingebettet sein.
Alternativ können ein oder mehrere Leiterbahnen zwischen dem ersten und zweiten Chip die physikalische Grundlage für den aufzubauenden Datenübertragungskanal bilden, wobei die dielektrischen oder anderweitige Eigenschaften dieser Leiterbahnen die erste und/oder zweite PUF bilden. Je nach Beschaffenheit des Kartenmaterials können zur Emission oder zur Generierung des ersten und/oder zweiten Signals jeweils gemäß i-ii) eine oder mehrere elektrische Feldquellen oder gemäß iii) eine oder mehrere magnetische Feldquellen oder gemäß iv) eine oder mehrere Lichtquellen oder eine Kombination als Signalquelle verwendet werden.

Nach Ausführungsformen handelt es sich bei dem Kartenmaterial, das die erste und/oder zweite PUF bildet, um ein Kartenmaterial, welches eine Vielzahl von chemolumineszierenden, phosphoreszierenden oder elektrolumineszierenden Partikeln und/oder Inhomogenitäten beinhaltet, die in ihrer Gesamtheit eine erste und/oder zweite Lichtquelle bilden, wobei das übrige Kartenmaterial zumindest für einen Teil des von der Lichtquelle emittierten Frequenzbereichs transparent ist. Die phosphoreszierenden, elektrolumineszierenden oder chemolumineszierenden Partikel können zufällig, z.B. aufgrund eines statistischen Durchmischungsprozesses während der Herstellung des Kartenmaterials, im Kartenmaterial verteilt sein. Bei Anregung durch eine karteninterne oder kartenexterne Anregungsquelle, z.B. elektrische Feldquelle (Elektrolumineszenz) oder eine Lichtquelle (Lumineszenz, Phosphoreszenz) das erste oder zweite Signal in Form von Licht sofort oder zeitverzögert aussenden. Die Verteilung (Größe, Position) dieser die Signalquelle bildender Partikel kann alleine oder in Kombination z.B. mit nichtlumineszierenden, lichtstreuenden Partikeln im Kartenmaterial die erste und/oder zweite PUF bilden. Die Verteilung der lumineszierenden Partikel und/oder die Verteilung von lichtstreuenden Partikeln kann ein Lichtsignal optische Informationen aufmodulieren z.B. in Form von ortsabhängigen Varianzen der Strahlungsintensitäten.

Nach Ausführungsformen ist eine erste Signalquelle, die das erste Signal über die erste PUF sendet, Bestandteil des zweiten Chips. Falls eine zweite Signalquelle das zweite Signal über die zweite PUF sendet, kann diese Bestandteil des ersten Chips sein. Zum Beispiel können sich der erste und zweite Chip gegenüberliegen, also z.B. auf oder angrenzend an zwei sich gegenüberliegenden Chipkartenoberflächen befinden, wobei das von der Signalquelle des einen Chips ausgehende und über eine PUF versendete Signal jeweils vom Sensorelement des gegenüberliegenden Chips empfangen wird.

Nach Ausführungsformen wird die Chipkartenfunktion von dem zweiten Chip durchgeführt während es sich dem ersten Chip handelt um:
- einen Chip zum Empfang von Daten von einem Eingabegerät; Bei dem Eingabegerät kann es sich z.B. um eine Tastatur eines mit der Chipkarte verbundenen Terminals, um ein PIN Pad des Terminals oder der Chipkarte, ein Mikrofon, einen Sensor für biometrische Daten eines Nutzers, dem die Chipkarte zugeordnet ist, oder ähnliches handeln; oder
- einen Chip zur Ausgabe von Daten; die Ausgabe kann beispielsweise über eine Anzeige der Chipkarte oder eines Terminals, über einen Drucker oder Lautsprecher etc. erfolgen; oder
- einen Sensorchip zur Sensierung eines physikalischen, chemischen oder biologischen Parameters, z.B. Temperatur, Lichtstärke, Luftdruck, Geoposition, etc. Insbesondere kann es sich um einen Chip zur Bestimmung der Position der Chipkarte; Bei dem Chip kann es sich also um einen Geopositionssensor, z.B. einen GPS Sensor, handeln.

In einem weiteren Aspekt betrifft die Erfindung ein Verfahren zur Personalisierung einer Chipkarte mit einer Chipkartenfunktion. Die Chipkartenfunktion wird von einem ersten und/oder zweiten Chip bereitgestellt. Der erste und der zweite Chip sind Bestandteil einer Chipkarte, deren Kartenmaterial den ersten und den zweiten Chip trägt. Durch das Kartenmaterial wird eine erste PUF bezüglich eines ersten Sensorelements des ersten Chips gebildet. Das Verfahren umfasst:
a1) Empfang eines ersten Signals, das durch die erste PUF bestimmt ist, durch das erste Sensorelement;
b1) Ableitung eines ersten kryptographischen Schlüssels durch den ersten Chip aus dem ersten Signal;
   - Speichern des ersten kryptographischen Schlüssels als ersten Referenzschlüssel in einem geschützten Speichermedium des zweiten Chips, wobei der erste Referenzschlüssel und der erste kryptographische Schlüssel ein symmetrisches kryptographisches Schlüsselpaar bilden und wobei der erste Referenzschlüssel als Personalisierungsmittel dient; und
   - nach der Speicherung des ersten Referenzschlüssels, Löschen des ersten kryptographischen Schlüssels von dem ersten Chip.

Zusätzlich oder alternativ dazu wird durch das Kartenmaterial eine zweite PUF bezüglich eines zweiten Sensorelements des zweiten Chips gebildet. Das Verfahren umfasst:
a2) Empfang eines zweiten Signals das durch die zweite PUF bestimmt ist durch das zweite Sensorelement;
b2) Ableitung eines zweiten kryptographischen Schlüssels durch den zweiten Chip aus dem zweiten Signal;
   - Speichern des zweiten kryptographischen Schlüssels als zweiten Referenzschlüssel in einem geschützten Speichermedium des ersten Chips, wobei der zweite Referenzschlüssel und der zweite kryptographische Schlüssel ein symmetrisches kryptographisches Schlüsselpaar bilden, wobei der zweite Referenzschlüssel allein oder in Kombination mit dem ersten Referenzschlüssel als Personalisierungsmittel dient;
   - nach der Speicherung des zweiten Referenzschlüssels, Löschen des zweiten kryptographischen Schlüssels von dem zweiten Chip.

Nach der Personalisierung kann der Speicher, in welchem der erste und/oder zweite Referenzschlüssel jeweils gespeichert ist, bleibend vor dem Zugriff durch andere Komponenten geschützt werden. Der erste bzw. zweite Referenzschlüssel, der zur Gewährleistung der sicheren Chip-Chip Datenübertragung dient, ist kartenindividuell und wird im Zuge der Personalisierung dem künftigen Kartenbesitzer somit individuell durch Übergabe der Karte zugeordnet.

In einer alternativen Ausführungsform umfasst die Personalisierung der Chipkarte folgende Schritte:
a1) Empfang eines ersten Signals, das durch die erste Physical Unclonable Function bestimmt ist, durch das erste Sensorelement;
b1) Ableitung eines ersten kryptographischen Schlüssels durch den ersten Chip aus dem ersten Signal;
   - Speichern des ersten kryptographischen Schlüssels als ersten Referenzschlüssel in einem geschützten Speichermedium des zweiten Chips, wobei der erste Referenzschlüssel und der erste kryptographische Schlüssel ein symmetrisches kryptographisches Schlüsselpaar bilden, wobei der erste Referenzschlüssel als Personalisierungsmittel dient; und
   - nach der Speicherung des ersten Referenzschlüssels, Löschen des ersten kryptographischen Schlüssels, so dass dieser in keinem Speichermedium der Chipkarte oder des ersten oder zweiten Chips gespeichert ist.

Zusätzlich oder alternativ dazu umfasst das Verfahren:
a2) Empfang eines zweiten Signals (Sig II) das durch die zweite Physical Unclonable Function bestimmt ist durch das zweite Sensorelement;
b2) Ableitung eines zweiten kryptographischen Schlüssels durch den zweiten Chip aus dem zweiten Signal;
   - Speichern eines zweiten Referenzschlüssels in einem Speichermedium des ersten Chips oder einem dem ersten Chip zugänglichen externen Speichermedium, wobei der zweite Referenzschlüssel und der zweite kryptographische Schlüssel ein asymmetrisches kryptographisches Schlüsselpaar bilden, wobei der zweite Referenzschlüssel als öffentlicher Schlüssel fungiert, wobei der zweite Referenzschlüssel allein oder in Kombination mit dem ersten Referenzschlüssel als Personalisierungsmittel dient;
   - nach der Speicherung des zweiten Referenzschlüssels, Löschen des zweiten kryptographischen Schlüssels, so dass dieser in keinem Speichermedium der Chipkarte oder des ersten oder zweiten Chips gespeichert ist.

In einem weiteren Aspekt betrifft die Erfindung eine Chipkarte mit einem ersten und einem zweiten Chip. Der erste Chip beinhaltet ein erstes Sensorelement. Der erste und/oder der zweite Chip sind zur Ausführung einer Chipkartenfunktion ausgebildet, d.h., der erste oder der zweite Chip können eine Chipkartenfunktion alleine und/oder in Interaktion miteinander ausführen. Die Chipkarte besteht aus oder beinhaltet zumindest teilweise Kartenmaterial welches den ersten und den zweiten Chip trägt. Durch das Kartenmaterial wird zumindest eine erste PUF bezüglich des ersten Sensorelements des ersten Chips gebildet. Die Chipkarte ist ausgebildet zum:
a1) Empfang eines ersten Signals, das durch die erste PUF bestimmt ist, durch das erste Sensorelement;
b1) Ableitung eines ersten kryptographischen Schlüssels durch den ersten Chip aus dem ersten Signal;
c1) Authentisierung gegenüber dem zweiten Chip mit Hilfe des ersten kryptographi-schen Schlüssels;
d) Aufbau einer kryptographisch geschützten Datenübertragungskanals zwischen erstem und zweiten Chip; und
e) Datenaustausch zwischen dem ersten und zweiten Chip über den Datenübertragungskanal zur Durchführung der Chipkartenfunktion

Im Weiteren werden Ausführungsformen der Erfindung mit Bezugnahme auf die Zeichnungen näher erläutert. Es zeigen:
- Figur 1: ein Blockdiagramm einer Chipkarte mit einem ersten und einem zweiten Chip,
- Figur 2: den Austauschs kryptographischer Schlüsseln zwischen zwei Chips,
- Figur 3: ein Flussdiagramm einer Ausführungsform des erfindungsgemäßen Verfahrens zur Durchführung einer Chipkartenfunktion,
- Figur 4: einen Querschnitt einer Chipkarte, und
- Figur 5: einen zweifachen Diffie-Hellman Schlüsselaustausch in Verbindung mit einer erfindungsgemäßen Signierung und Signaturprüfung.

Elemente der nachfolgenden Ausführungsformen, die einander entsprechen, werden mit denselben Bezugszeichen gekennzeichnet.

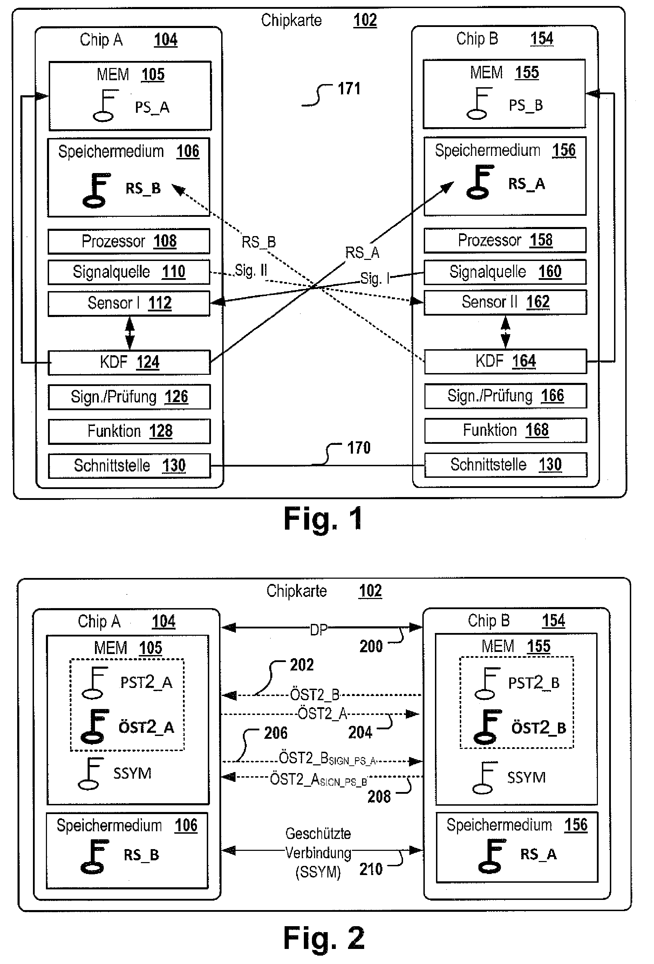

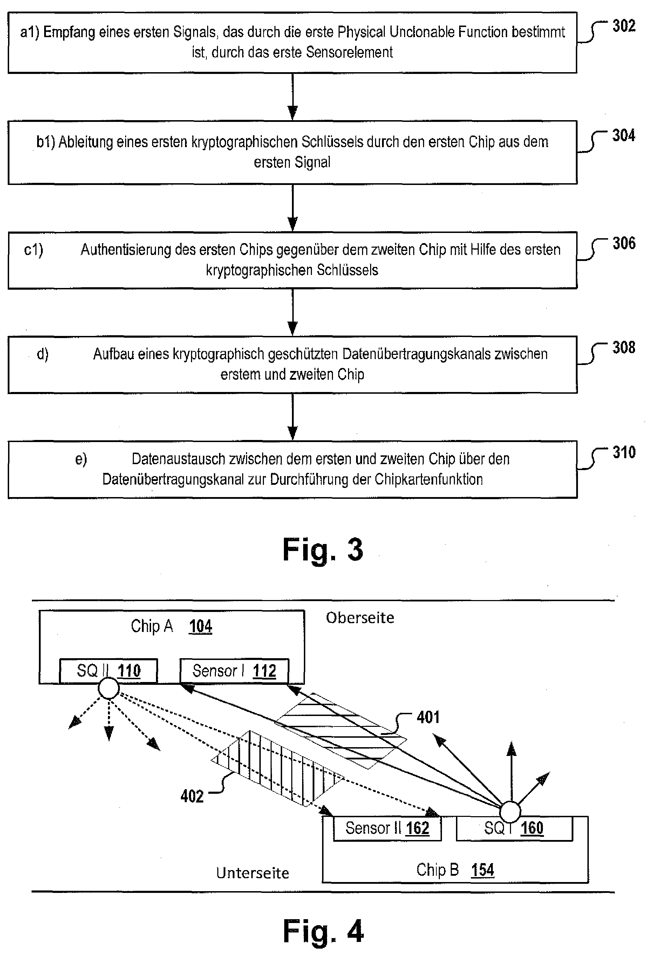

Figur 1 zeigt eine Chipkarte 102 mit einem ersten Chip 104 und einem zweiten Chip 154. Die beiden Chips sind in das Chipkartematerial 171 der Chipkarte eingebettet. Der erste Chip besitzt ein flüchtiges Speichermedium 105 zur temporären Speicherung von Daten sowie einen Speichermedium 106 zur permanenten Speicherung von Daten. Außerdem besitzt der erste Chip einen Prozessor 108, eine Signalquelle 110 sowie ein erstes Sensorelement 112. Das erste Sensorelement ist dazu ausgebildet ein erstes Signal Sig. I von einer Signalquelle 160 über eine erste PUF zu empfangen. Die erste PUF kann zum Beispiel aus einer Leiterbahn zwischen dem Sensor 112 und der Signalquelle 160 bestehen oder in dem Kartenmaterial, welches den Raum zwischen dem ersten Sensor 112 und der Signalquelle 160 vollständig oder teilweise ausfüllt und damit einen ersten Signalübertragungsweg bildet. Wenn der Sensor 112 ein erstes Signal über eine erste PUF 401, wie zum Beispiel in Figur 4 dargestellt, empfängt, führt der erste Chip 104 eine Schlüsselableitungsfunktion 124 durch um einen ersten kryptographischen Schlüssel PS_A zu berechnen. Der erste kryptographische Schlüssel kann in einem temporären Speichermedium 105 der Chipkarte temporär gespeichert werden. In jedem Fall ist der erste Chip 104 so ausgebildet, dass der kryptographische Schlüssel PS_A nicht bleibend in diesem gespeichert wird. Vielmehr wird der Schlüssel PS_A dazu verwendet, einen Referenzschlüssel RS_A durch den Chip 104 zu berechnen, der an den zweiten Chip 154 übertragen und dort in einem nicht flüchtigen Speichermedium 156 gespeichert wird. Falls es sich bei den Referenzschlüssel RS_A um einen symmetrischen Schlüssel handelt, ist dieser identisch zu dem ersten abgeleiteten Schlüssel PS_A und es ist aus Sicherheitsgründen notwendig, dass die Speicherung des Referenzschlüssels in dem Speichermedium 156 geschützt erfolgt, d.h., dass das Speichermedium 156 selbst nur durch den ersten Chip 104 ausgelesen werden kann oder dass anderweitig sichergestellt wird, dass der erste Referenzschlüssel RS_A nur durch den ersten Chip ausgelesen werden kann. Falls es sich bei den Referenzschlüssel um einen öffentlichen kryptographischen Schlüssel handelt, welcher zusammen mit dem ersten kryptographischen Schlüssel PS_A ein asymmetrisches kryptographisches Schlüsselpaar bildet, kann der Referenzschlüssel RS__A auch in einem externen, dem Chip 154 zugänglichen Speichermedium gespeichert sein bzw. es kann sich bei dem Speichermedium 156 um ein nicht geschütztes, nicht flüchtiges Speichermedium handeln. Die Ableitung des ersten kryptographischen Schlüssels kann erstmalig im Zuge der Personalisierung oder Herstellung der Chipkarte erfolgen.

Der Chip 104 verfügt ferner über eine Chipkartenfunktion 128, welche nur dann ausgeführt werden kann, wenn über die Schnittstellen 130 des ersten 104 und zweiten 154 Chips ein sicherer, d.h. kryptographisch geschützter Datenübertragungskanal 170 ausgebildet wurde.

Ein Auslösebefehl, der die Ausführung der Chipkartenfunktion 128 bewirken soll, kann beispielsweise an den zweiten Chip 154 gesendet werden und dessen Signalquelle 160 dazu veranlassen, ein erstes Signal auszusenden welches von dem ersten Sensor 112 über die erste PUF 401 (siehe Fig. 4) empfangen wird. Auf den empfangenen ersten Signal leitet die Ableitungsfunktion 124 erneut den ersten kryptographischen Schlüssel ab und verwendet diesen dazu, einen Datenwert mit dem Schlüssel PS_A zu signieren und den signierten Datenwert an den zweiten Chip 154 zu übertragen. Der Chip 154 verwendet den permanent gespeicherten Referenzschlüssel RS_A um die Signatur des übertragenen signierten Datenwertes zu überprüfen. Die Überprüfung wird von dem Modul 166 des zweiten Chips 154 durchgeführt. Im Falle einer erfolgreichen Signaturprüfung (also einer Feststellung dass der signierten Datenwert mit einem Schlüssel PS_A signiert wurde, welcher der zu dem Referenzschlüssel RS_A komplementäre kryptographische Schlüssel ist) hat sich der erste Chip 104 gegenüber dem zweiten Chip 154 erfolgreich als ein Chip authentisiert, der schon bei der Herstellung oder Personalisierung der Chipkarte in der Karte vorhanden war und somit vertrauenswürdig ist.

Auf dem nicht flüchtigen Speichermedium 106 des ersten Chips 104 kann einen Referenzschlüssel RS_B gespeichert sein, welcher zu einem durch den zweiten Chip 154 bei der Herstellung oder Personalisierung abgeleiteten zweiten kryptographischen Schlüssel PS_B komplementär ist. Komplementarität bedeutet im Kontext dieser Erfindung bei der Verwendung symmetrischer Kryptographie Identität des Referenzschlüssels Schlüssels (z.B. RS_B) zu dem abgeleiteten Schlüssel (z.B. PS_B) von welchem der Referenzschlüssel stammt. Bei der Verwendung asymmetrischer Kryptographie bedeutet Komplementarität, dass der Referenzschlüssel (z.B. RS_B) und der von dem Signal abgeleitete Schlüssel (z.B. PS_B) zusammen ein asymmetrisches kryptographisches Schlüsselpaar bilden, wobei der Referenzschlüssel den öffentlichen Schlüssel darstellt. Analoges gilt für RS_A und PS_A.

Der zweite Chip 154 verfügt ebenfalls über einen flüchtigen Datenspeicher 155 zur temporären Speicherung eines zweiten durch den Chip 154 abgeleiteten kryptographischen Schlüssels PS_B. Außerdem verfügt er über ein nicht flüchtiges Speichermedium 156 zur Speicherung des Referenzschlüssels RS_A. Er verfügt über einen Prozessor 158 und die Signalquelle 160, von welcher das von dem ersten Sensorelement 112 über die erste PUF empfangene Signal ausgeht. Außerdem verfügt der Chip 154 über ein zweites Sensorelement 162, welches ein zweites Signal Sig. II von der Signalquelle 110 über eine zweite PUF 402 empfangen kann. Das empfangene zweite Signal wird im Zuge der Herstellung oder Personalisierung der Chipkarte zur Ableitung des zweiten kryptographischen Schlüssels PS_B durch die Schlüsselableitungsfunktion 164 verwendet. Ein zu dem Schlüssel PS_B komplementär Referenzschlüssel RS_B wird bei der Herstellung bzw. Personalisierung in Abhängigkeit von dem zweiten kryptographischen Schlüssel ermittelt und in das Speichermedium 106 des ersten Chips gespeichert.

Um die Chipkartenfunktion 128 des ersten Chips 104 und/oder die Chipkartenfunktion 168 des zweiten Chips 154 durchzuführen kann das zweite Sensorelement 162 zur Laufzeit ein zweites Signal von der Signalquelle 110 über die zweite PUF empfangen und erneut den zweiten kryptographischen Schlüssel PS_B ableiten. Der zweite kryptographische Schlüssel PS_B wird zur Signierung eines Datenwertes verwendet und der signierten Datenwert an den ersten Chip zum Zwecke der Signaturprüfung durch den Referenzschlüssel RS_B übermittelt. Das Modul 126 führt eine Signaturprüfung durch. Im Falle einer erfolgreichen Prüfung hat sich der zweite Chip 154 gegenüber dem ersten Chip authentisiert.

Nach beidseitig erfolgreicher Authentisierung wird ein kryptografisch gesicherter Datenübertragungskanal 170 zwischen dem ersten und zweiten Chip aufgebaut um Daten zu übertragen die zur Ausführung der Chipkartenfunktion erforderlich sind.

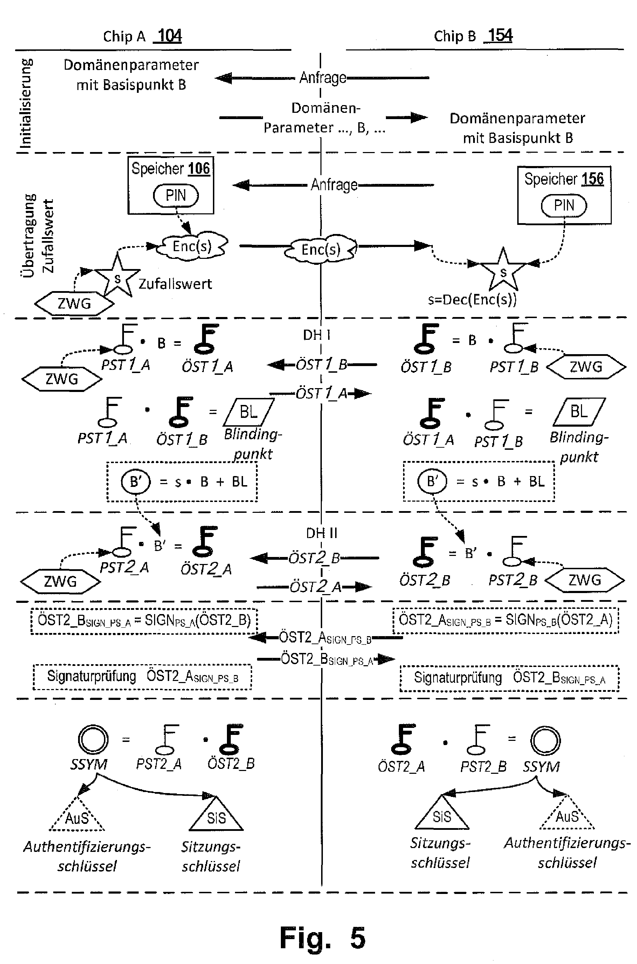

Figur 2 zeigt einige zum Zwecke der gegenseitigen Authentisierung zwischen dem ersten und zweiten Chip 104,154 ausgetauschten Daten. Eine gegenseitige Authentifizierung kann zum Beispiel nach einem Verfahren nach Figur 5 erfolgen, welches die in Figur 2 dargestellten Austauschschritte und noch einige weitere Schritte umfasst.

Zunächst einigen sich die beiden Chips auf einen gemeinsamen Satz an Domänenparametern DP. Dies kann zum Beispiel dadurch geschehen, dass ein Chip diese bei dem anderen anfrägt und die Parameter als Antwort 200 erhält.
Chip 104 kann ein temporäres asymmetrisches kryptographisches Schlüsselpaar generieren, welches aus einem privaten Schlüssel PST2_A und einem entsprechenden öffentlichen Schlüssel ÖST2_A besteht. In analoger Weise kann Chip 154 ein temporäres asymmetrisches kryptographisches Schlüsselpaar generieren, welches auf einem privaten Schlüssel PST2_B und einem entsprechenden öffentlichen Schlüssel ÖST2_B besteht. Die jeweils generierten temporären asymmetrischer Schlüsselpaare werden auf der Basis der ausgetauschten Domänenparameter berechnet und in flüchtigen Speichermedien 105,155 der beiden Chips gespeichert. Die beiden öffentlichen Schlüssel ÖST2_B und ÖST2_A werden in den Schritten 202 bzw. 204 an den jeweils anderen Chip übertragen um dort mit einem zur Laufzeit der Chipkarte erneut abgeleiteten kryptographischen Schlüssel (PS_A im Falle des Chips 104 und PS_B im Falle des Chips 154) signiert zu werden. ÖST2_B_{SIGN}__{PS}__{A} ist also ein temporärer öffentlicher Schlüssel ÖST2_B, welcher mit dem kryptographischen Schlüssel PS_A signiert wurde. PST2_A_{SIGN_PS_B} ist entsprechend ein temporärer öffentlicher Schlüssel ÖST2_A, welcher mit dem kryptographischen Schlüssel PS_B signiert wurde. Die signierten temporären öffentlichen Schlüssel werden in den Schritten 206 und 208 zwischen den beiden Chips ausgetauscht. Chip 104 verwendet den in dem Speichermedium 106 permanent gespeicherten Referenzschlüssel RS_B zur Signaturprüfung des empfangenen PST2_A_{SIGN_PS_B} und Chip 154 verwendet den in dem Speicher 156 gespeicherten Referenzschlüssel RS_A zur Signaturprüfung des empfangenen PST2_B_{SIGN_PS_A}.

Figur 3 zeigt ein Flussdiagramm einer Ausführungsform des erfindungsgemäßen Verfahrens. In einem ersten Schritt 302 wird ein erstes Signal Sig. I, dass durch eine erste PUF 401 bestimmt ist, durch ein erstes Sensorelement 112 eines Chips 104 einer Chipkarte empfangen. Das erste Signal kann zum Beispiel von einer Signalquelle 160 eines weiteren Chips 154, der sich auf der gleichen Chipkarte befindet, in einer noch nicht durch eine PUF modifizierten Form emittiert werden, wie dies in Figur 1 und insbesondere Figur 4 näher dargestellt ist. In Schritt 304 leitet der erste Chip einen ersten kryptographischen Schlüssel PS_A mit Hilfe einer vorzugsweise robusten Ableitungsfunktion 124 von dem empfangenen ersten Signal ab. In Schritt 306 authentifiziert sich der erste Chip gegenüber dem zweiten Chip mit Hilfe des abgeleiteten ersten kryptographischen Schlüssels PS_A. Erfolgt in Schritt 308 ein Aufbau eines kryptographisch geschützten Datenübertragungskanals zwischen dem ersten 104 und dem zweiten 154 Chip. Über den geschützten Datenübertragungskanal werden in Schritt 310 Daten zwischen dem ersten und dem zweiten Chip zur Durchführung einer Chipkartenfunktion 128, 168 ausgetauscht.

**Figur 4** zeigt einen Querschnitt einer Chipkarte 102 gemäß einer Ausführungsform der Erfindung. In dieser Ausführungsform ist der erste Chip 104 auf, an oder unter der Oberseite der Chipkarte in das Trägermaterial 171 der Chipkarte ein gebettet. Der zweite Chip 154 ist auf, an oder unter der Unterseite der Chipkarte in das Trägermaterial eingebettet. Auch andere Anordnungen sind jedoch möglich, z.B. können sich die beiden Chips nebeneinander, z.B. in der Kartenmitte, befinden. Die Chips können z.B. "face-to-face" oder "tail-to-tail" positioniert sein. Chip 104 beinhaltet ein erstes Sensorelement 112 welches von einer Signalquelle 160 des zweiten Chips 154 emittiertes erstes Signal über eine erste PUF 401 empfangen kann, die das erste Signal modifiziert. Chip 154 beinhaltet ein zweites Sensorelement 162 welches von einer Signalquelle 110 des ersten Chips 104 ein zweites Signal über eine zweite PUF 402 empfangen kann. Die erste PUF kann zum Beispiel durch die Verteilung lichtstreuender Partikel innerhalb eines zumindest teilweise transparenten Kartenmaterials 171 bedingt sein. In diesem Fall handelt es sich bei der Signalquelle 160 um eine Lichtquelle, zum Beispiel ein LED Element.

Alternativ dazu (in Figur 4 nicht dargestellt) kann die Signalquelle 160 zwar durch den zweiten Chip kontrolliert werden, sich jedoch räumlich außerhalb des zweiten Chips befinden, zum Beispiel innerhalb der ersten PUF 401. So könnte zum Beispiel der zweite Chip 154 über eine Lichtquelle verfügen, welche zum Zwecke der Durchführung der Chipkartenfunktion aktiviert wird. Diese Lichtquelle sendet Licht aus, welches wiederum fluoreszierende Partikel, die in dem Trägermaterial statistisch verstreut sind und die erste PUF 401 konstituieren, anregt. Die Position und/oder Größe dieser fluoreszierenden Partikel zwischen der Lichtquelle und dem Sensorelement 112 bilden in diesem Fall die erste PUF. Das erste Signal, das von dem Sensorelement 112 empfangen und zur Ableitung des ersten kryptographischen Schlüssels verwendet wird ist also nicht das Lichtsignal der Lichtquelle, sondern besteht aus der Fluoreszenzstrahlung, die von einer Vielzahl von fluoreszierenden Partikeln der ersten PUF nach deren Anregung durch die Lichtquelle emittiert wird.

Falls das Kartenmaterial in dem Bereich der ersten oder zweiten PUF 401, 402 durch mechanische Manipulationen verändert wurde, verändert sich damit auch die erste bzw. zweite PUF und somit auch der abgeleitete kryptographische Schlüssel.

**Figur 5** zeigt ein Ablaufschema zum Aufbau des kryptographisch geschützten Datenübertragungskanals 170 nach einer Ausführungsform der Erfindung. Zunächst müssen sich die beiden Chips auf einem Satz Domänenparameter einigen, was zum Beispiel im Zuge der Initialisierung des Verfahrens nach einem Anfrage-Antwort-Schema erfolgen kann. Jeder der beiden Chips verfügt über einen nicht flüchtigen Speicher 106,156, in welchem jeweils ein geteiltes Geheimnis gespeichert ist, zum Beispiel eine PIN. Ein Zufallswertgenerator ZWG des ersten Chips generiert einen Zufallswert s, verschlüsselt diesen mit Hilfe des geteilten Geheimnisses und übermittelt den verschlüsselten Zufallswert an den zweiten Chip. Der zweite Chip, der ja ebenfalls über das geteilte Geheimnis verfügt, verwendet dieses Geheimnis um den Zufallswert s zu entschlüsseln und um sicherzustellen, dass der erste Chip ebenfalls über das geteilte Geheimnis verfügt.

Der erste Chip erzeugt nun einen Zufallswert PST1_A und leitet aus diesem mittels eines der Domänenparameter einen öffentlichen Schlüssel ÖST1_A ab, welcher zusammen mit dem Zufallswert PST1_A ein asymmetrisches kryptographisches Schlüsselpaar bildet. Der zweite Chip erzeugt ebenfalls einen Zufallswert PST1_B und leitet aus diesem mittels eines der Domänenparameter einen öffentlichen Schlüssel ÖST1_B ab, welcher zusammen mit dem Zufallswert PST1_B ein asymmetrisches kryptographisches Schlüsselpaar bildet. Die beiden öffentlichen Schlüssel ÖST1_A und ÖST1_B werden im Zuge eines ersten Diffie-Hellman Schlüsselaustausches DHI zwischen den beiden Chips ausgetauscht und dienen zur Berechnung eines weiteren geteilten Geheimnisses B' unter Verwendung des Zufallswertes s und eines der Domänenparameter.

Schließlich wird jeweils durch den Zufallswertgenerator ZWG des ersten und des zweiten Chips ein weiterer Zufallswert PST2_A bzw. PST2_B gebildet, welche jeweils als weitere temporäre private kryptographische Schlüssel fungieren. PST2_A bzw. PST2_B und das geteilte gemeinsame Geheimnis B' wird durch jede der beiden Chipkarten zur Berechnung eines öffentlichen Schlüssels ÖST2_A bzw. ÖST2_B verwendet. PST2_A und ÖST2_A bilden zusammen ein temporäres asymmetrisches kryptographisches Schlüsselpaar, dass in temporären Speicher 105 gespeichert wird. PST2_B und ÖST2_B bilden zusammen ein temporäres asymmetrisches kryptographisches Schlüsselpaar, das in temporärem Speicher 154 gespeichert wird. Die beiden öffentlichen Schlüssel ÖST2_A und ÖST2_B werde im Zuge eines zweiten Diffie-Hellman Schlüsselaustauschs zwischen den beiden Chips ausgetauscht.

Zum Zwecke des sicheren Kommunikationskanals zur Durchführung der Chipkartenfunktion leitet die erste Chipkarte 104 zunächst den ersten kryptographischen Schlüssel PS_A aus dem ersten über die erste PUF empfangenen Signal ab und signiert mit diesem Schlüssel den temporären kryptographischen Schlüssel ÖST2_B. In analoger Weise leitet die zweite Chipkarte 154 den zweiten kryptographischen Schlüssel PS_B aus dem zweiten über die zweite PUF empfangenen Signal ab und signiert mit diesem Schlüssel den temporären kryptographischen Schlüssel ÖST2_A.
Die beiden signierten öffentlichen Schlüssel werden ausgetauscht und einer Signaturprüfung durch den jeweils als Empfänger agierenden Chip unterzogen. Eine erfolgreiche beidseitige Signaturprüfung ermöglicht eine gegenseitige Authentisierung der beiden Chips und den Aufbau eines kryptographisch gesicherten Datenaustauschkanals 170. Im Falle einer erfolgreichen Authentisierung des Chips 154 gegenüber Chip 104 berechnet Chip 104 einen symmetrischen kryptografischen Schlüssel SSYM aus dem privaten Schlüssel PST2_A und dem öffentlichen Schlüssel ÖST2_B. Im Falle einer erfolgreichen Authentisierung des Chips 104 gegenüber Chip 154 berechnet Chip 154 den symmetrischen kryptographischen Schlüssel SSYM aus dem privaten Schlüssel PST2_B und dem öffentlichen Schlüssel ÖST2_A. Der symmetrische kryptographische Schlüssel SSYM kann selbst als Sitzungsschlüssel SiS zum Aufbau des kryptographisch geschützten Datenübertragungskanals oder zur Ableitung entsprechender Sitzungsschlüssel verwendet werden. Zudem kann der symmetrische Schlüssel SSYM als Authentisierungsschlüssel verwendet werden, welcher zum Zwecke der Authentisierung zwischen den beiden Chips ausgetauscht wird. Die Authentisierungsschlüssel AuS können aber auch von dem symmetrischen Schlüssel SSYM abgeleitet werden.
Schließlich können Daten zwischen den beiden Chips ausgetauscht werden um eine Chipkartenfunktion durchzuführen. So kann es sich beispielsweise bei Chip 154 um einen GPS Sensor handeln, welcher die aktuelle Position der Chipkarte ermittelt und die Positionsdaten an den Chip 104 über den geschützten Datenübertragungskanal 170 überträgt. Chip 104 kann eine Chipkartenfunktion 128 zur Erhebung einer positionsabhängigen Maut basierend auf den von Chip 154 empfangenen Positionsdaten beinhalten. Eine erfindungsgemäße Chipkarte ist fälschungssicher: der mutwillige Austausch des GPS Sensors 154 durch einen GPS Sensor, der gefälschte Positionsdaten zum Zwecke der Umgehung oder Reduktion der Mautgebühr liefert, würde zu einer Veränderung der ersten und/oder zweiten PUF führen mit der Folge dass eine gegenseitige Signaturprüfung und Chipauthentisierung und damit die Durchführung der mauterhebenden Chipkartenfunktion komplett unmöglich gemacht würde.

## Patentansprüche

1. Verfahren zur Durchführung einer Chipkartenfunktion (128, 168) die von einem ersten (104) und/oder zweiten (154) Chip bereitgestellt wird, wobei der erste und der zweite Chip Bestandteil einer Chipkarte (102) sind, deren Kartenmaterial (171) den ersten und den zweiten Chip trägt, wobei durch das Kartenmaterial eine erste Physical Unclonable Function PUF (401) bezüglich eines ersten Sensorelements (112) des ersten Chips gebildet wird, mit:
a1) Empfang (302) eines ersten Signals (Sig I), das durch die erste Physical Unclonable Function bestimmt ist, durch das erste Sensorelement (112);
b1) Ableitung (304) eines ersten kryptographischen Schlüssels (PS_A) durch den ersten Chip aus dem ersten Signal;
c1) Authentisierung (306) des ersten Chips gegenüber dem zweiten Chip mit Hilfe des ersten kryptographischen Schlüssels;
d) Aufbau (308) eines kryptographisch geschützten Datenübertragungskanals (210) zwischen erstem und zweiten Chip; und
e) Datenaustausch (310) zwischen dem ersten und zweiten Chip über den Datenübertragungskanal zur Durchführung der Chipkartenfunktion.

2. Verfahren nach Anspruch 1, wobei durch das Kartenmaterial eine zweite Physical Unclonable Function bezüglich eines zweiten Sensorelements (162) des zweiten Chips gebildet wird, ferner mit:
a2) Empfang eines zweiten Signals (Sig II) das durch die zweite Physical Unclonable Function (402) bestimmt ist durch das zweite Sensorelement (162);
b2) Ableitung eines zweiten kryptographischen Schlüssels (PS_B) durch den zweiten Chip aus dem zweiten Signal;
c2) Authentisierung des zweiten Chips gegenüber dem ersten Chip mit Hilfe des zweiten kryptographischen Schlüssels.

3. Verfahren nach Anspruch 2, wobei der Aufbau des kryptographisch geschützten Datenübertragungskanals nur nach erfolgreicher Authentisierung des ersten Chips gegenüber dem zweiten Chip und nach erfolgreicher Authentisierung des zweiten Chips gegenüber dem ersten Chip erfolgt.

4. Verfahren nach einem der vorigen Ansprüche, wobei eine Herstellung oder Personalisierung der Chipkarte folgende Schritte umfasst:
- Durchführung der Schritte a1-b1);
- Speichern des ersten kryptographischen Schlüssels (PS_A) als ersten Referenzschlüssel in einem geschützten Speichermedium (156) des zweiten Chips, wobei der erste Referenzschlüssel und der erste kryptographische Schlüssel ein symmetrisches kryptographisches Schlüsselpaar bilden;
- nach der Speicherung des ersten Referenzschlüssels, Löschen des ersten kryptographischen Schlüssels von dem ersten Chip;
und/oder
- Durchführung der Schritte a2-b2);
- Speichern des zweiten kryptographischen Schlüssels (PS_B) als zweiten Referenzschlüssel in einem geschützten Speichermedium (106) des ersten Chips, wobei der zweite Referenzschlüssel und der zweite kryptographische Schlüssel ein symmetrisches kryptographisches Schlüsselpaar bilden;
- nach der Speicherung des zweiten Referenzschlüssels, Löschen des zweiten kryptographischen Schlüssels von dem zweiten Chip.

5. Verfahren nach einem der vorigen Ansprüche 1-3, wobei eine Herstellung oder Personalisierung der Chipkarte folgende Schritte umfasst:
- Durchführung der Schritte a1-b1);
- Speichern eines ersten Referenzschlüssels (RS_A) in einem Speichermedium (156) des zweiten Chips oder einem dem zweiten Chip zugänglichen externen Speichermedium, wobei der erste Referenzschlüssel und der erste kryptographische Schlüssel ein asymmetrisches kryptographisches Schlüsselpaar bilden, wobei der erste Referenzschlüssel als öffentlicher Schlüssel fungiert;
- nach der Speicherung des ersten Referenzschlüssels, Löschen des ersten kryptographischen Schlüssels, so dass dieser in keinem Speichermedium der Chipkarte oder des ersten oder zweiten Chips gespeichert ist;
und/oder
- Durchführung der Schritte a2-b2);
- Speichern eines zweiten Referenzschlüssels (RS_B) in einem Speichermedium (106) des ersten Chips oder einem dem ersten Chip zugänglichen externen Speichermedium, wobei der zweite Referenzschlüssel und der zweite kryptographische Schlüssel ein asymmetrisches kryptographisches Schlüsselpaar bilden, wobei der zweite Referenzschlüssel als öffentlicher Schlüssel fungiert;
- nach der Speicherung des zweiten Referenzschlüssels, Löschen des zweiten kryptographischen Schlüssels, so dass dieser in keinem Speichermedium der Chipkarte oder des ersten oder zweiten Chips gespeichert ist.

6. Verfahren nach einem der vorigen Ansprüche 4-5,
- wobei der erste Chip zur Authentisierung einen ersten Datenwert (ÖST2_B) mit dem ersten kryptographischen Schlüssel (PS_A) signiert und wobei der signierte erste Datenwert an den zweiten Chip zur Signaturprüfung durch den zweiten Chip mittels des ersten Referenzschlüssels übertragen wird; und/oder
- wobei der zweite Chip zur Authentisierung einen zweiten Datenwert (ÖST2_A) mit dem zweiten kryptographischen Schlüssel (PS_B) signiert und wobei der signierte zweite Datenwert an den ersten Chip zur Signaturprüfung durch den ersten Chip mittels des zweiten Referenzschlüssels übertragen wird.

7. Verfahren nach einem der vorigen Ansprüche, wobei die Authentisierung des ersten Chips gegenüber dem zweiten Chip umfasst:
- Vereinbarung (200) von Domänenparametern (DP) zwischen dem ersten und dem zweiten Chip;
- Generierung eines Zufallswerts, der als erster temporärer privater Schlüssel (PST2_B) fungiert, durch den zweiten Chip;
- Ableitung eines ersten temporären öffentlichen Schlüssels (ÖST2_B) aus dem ersten privaten temporären Schlüssel und zumindest einem der Domänenparameter durch den zweiten Chip, wobei der erste temporäre private und der erste temporäre öffentliche Schlüssel ein asymmetrisches kryptographisches Schlüsselpaar bilden;
- Übertragung des ersten temporären öffentlichen Schlüssels von dem zweiten Chip an den ersten Chip im Zuge eines ersten Diffie-Hellman-Schlüsselaustauschs;
- In Antwort auf die Übertragung des ersten temporären öffentlichen Schlüssels, Initiierung der Durchführung der Schritte a1-b1) und Verwendung des ersten kryptographischen Schlüssels durch den ersten Chip zur Signierung des übertragenen ersten temporären öffentlichen Schlüssels; und
- Übertragung des signierten ersten temporären öffentlichen Schlüssels ÖST2_B_{SIGN_PS_A}) von dem ersten Chip an den zweiten Chip;
- Signaturprüfung des signierten ersten temporären öffentlichen Schlüssels mit Hilfe des ersten Referenzschlüssels (RS_A) durch den zweiten Chip; wobei der Aufbau der kryptographisch geschützten Verbindung umfasst:
- Ableitung eines Sitzungsschlüssels (SSYM) aus dem ersten temporären öffentlichen Schlüssel durch den ersten Chip zur Verwendung des Sitzungsschlüssels zur Verschlüsselung aller vom ersten Chip über den kryptographisch geschützten Datenübertragungskanal (210) übertragenen Daten.

8. Verfahren nach Anspruch 7, wobei die Authentisierung des zweiten Chips gegenüber dem ersten Chip umfasst:
- Generierung eines weiteren Zufallswerts der als zweiter temporärer privater Schlüssel (PST2_A) fungiert durch den ersten Chip;
- Ableitung eines zweiten temporären öffentlichen Schlüssels (ÖST2_A) aus dem zweiten privaten temporären Schlüssel und dem zumindest einem Domänenparameter durch den ersten Chip, wobei der zweite temporäre private und der zweite temporäre öffentliche Schlüssel ein asymmetrisches kryptographisches Schlüsselpaar bilden;
- Übertragung des zweiten temporären öffentlichen Schlüssels von dem ersten Chip an den zweiten Chip im Zuge des ersten Diffie-Hellman-Schlüsselaustauschs;
- In Antwort auf die Übertragung des zweiten temporären öffentlichen Schlüssels, Initiierung der Durchführung der Schritte a2-b2) und Verwendung des zweiten kryptographischen Schlüssels durch den zweiten Chip zur Signierung des übertragenen zweiten temporären öffentlichen Schlüssels; und
- Übertragung des signierten zweiten temporären öffentlichen Schlüssels (ÖST2_A_{SIGN_PS_B}) von dem zweiten Chip an den ersten Chip;
- Signaturprüfung des signierten zweiten temporären öffentlichen Schlüssels mit Hilfe des zweiten Referenzschlüssels (RS_B) durch den ersten Chip; wobei der Aufbau der kryptographisch geschützten Verbindung umfasst:
- Ableitung des Sitzungsschlüssels (SSYM) aus dem zweiten temporären öffentlichen Schlüssel durch den zweiten Chip zur Verwendung des Sitzungsschlüssels zur Verschlüsselung aller vom zweiten Chip über den kryptographisch geschützten Datenübertragungskanal übertragenen Daten.

9. Verfahren nach einem der vorigen Ansprüche, wobei die Schritte a1-c1 und/oder a2-c2 für jede Durchführung der Chipkartenfunktion erneut durchgeführt werden.

10. Verfahren nach einem der vorigen Ansprüche,
- wobei das erste Signal von einer ersten Signalquelle stammt, wobei die erste Signalquelle und der erste Sensor relativ zueinander so innerhalb der Chipkarte angeordnet sind, dass bei mechanischer, elektrischer, thermischer oder chemischer Modifikation des Kartenmaterials, das die erste Physical Unclonable Function bildet, ein anderer Datenwert als der erste kryptographische Schlüssel aus dem ersten Signal abgeleitet wird,
und/oder
- wobei das zweite Signal von der ersten oder einer zweiten Signalquelle stammt, wobei die Signalquelle von der das zweite Signal stammt und der zweite Sensor relativ zueinander so innerhalb der Chipkarte angeordnet sind, dass bei mechanischer, thermischer oder chemischer Modifikation des Kartenmaterials, das die zweite Physical Unclonable Function bildet, ein anderer Datenwert als der zweite kryptographische Schlüssel aus dem zweiten Signal abgeleitet wird.

11. Verfahren nach einem der vorigen Ansprüche,
- wobei Materialeigenschaften des Kartenmaterials, welche die erste und/oder zweite PUF bestimmen, umfassen: einen Aufdruck auf die Karte; eine inhomogene Verteilung von Materialeigenschaften; die Größe und/oder Position von Partikeln innerhalb des Kartenmaterials, das die erste und/oder zweite Physical Unclonable Function bildet und/oder wobei die Materialeigenschaften eine oder mehrere der folgenden Eigenschaften umfassen: i) elektrische, ii) dielektrische, iii) magnetische, oder iv) optische Eigenschaften; und
- wobei das erste und/oder zweite Signal jeweils i-ii) durch ein oder mehrere elektrische Feldquellen oder iii) ein oder mehrere magnetische Feldquellen oder iv) ein oder mehrere Lichtquellen ausgesendet wird.

12. Verfahren nach einem der vorigen Ansprüche, wobei es sich bei dem Kartenmaterial, das die erste und/oder zweite Physical Unclonable Function bildet um ein Kartenmaterial handelt, welches eine Vielzahl von chemolumineszierenden, phosphoreszierenden oder elektrolumineszierenden Partikeln und/oder Inhomogenitäten beinhaltet, die in ihrer Gesamtheit eine erste und/oder zweite Lichtquelle bilden, wobei das übrige Kartenmaterial zumindest für einen Teil des von der Lichtquelle emittierten Frequenzbereichs transparent ist.

13. Verfahren nach einem der vorigen Ansprüche, wobei eine erste Signalquelle, die das erste Signal über die erste Physical Unclonablel Function sendet, Bestandteil des zweiten Chips und/oder wobei eine zweite Signalquelle die das zweite Signal über die erste Physical Unclonablel Function sendet, Bestandteil des ersten Chips ist.

14. Verfahren nach einem der vorigen Ansprüche, wobei die Chipkartenfunktion von dem zweiten Chip durchgeführt wird und es sich dem ersten Chip handelt um:
- einen Chip zum Empfang von Daten von einem Eingabegerät; oder
- einen Chip zur Ausgabe von Daten; oder
- einen Chip zur Sensierung eines physikalischen, chemischen oder biologischen Parameters

15. Verfahren zur Personalisierung einer Chipkarte mit einer Chipkartenfunktion (128, 168) die von einem ersten (104) und/oder zweiten (154) Chip bereitgestellt wird, wobei der erste und der zweite Chip Bestandteil einer Chipkarte (102) sind, deren Kartenmaterial (171) den ersten und den zweiten Chip trägt, wobei durch das Kartenmaterial eine erste Physical Unclonable Function (PUF) bezüglich eines ersten Sensorelements (112) des ersten Chips gebildet wird, mit:
a1) Empfang eines ersten Signals (Sig I), das durch die erste Physical Unclonable Function bestimmt ist, durch das erste Sensorelement (112);
b1) Ableitung eines ersten kryptographischen Schlüssels (PS_A) durch den ersten Chip aus dem ersten Signal;
- Speichern des ersten kryptographischen Schlüssels (PS_A) als ersten Referenzschlüssel in einem geschützten Speichermedium (156) des zweiten Chips, wobei der erste Referenzschlüssel und der erste kryptographische Schlüssel ein symmetrisches kryptographisches Schlüsselpaar bilden und wobei der erste Referenzschlüssel als Personalisierungsmittel dient;
- nach der Speicherung des ersten Referenzschlüssels, Löschen des ersten kryptographischen Schlüssels von dem ersten Chip;
und/oder
wobei durch das Kartenmaterial eine zweite Physical Unclonable Function bezüglich eines zweiten Sensorelements (162) des zweiten Chips gebildet wird und das Verfahren umfasst:
a2) Empfang eines zweiten Signals (Sig II) das durch die zweite Physical Unclonable Function bestimmt ist durch das zweite Sensorelement (162);
b2) Ableitung eines zweiten kryptographischen Schlüssels (PS_B) durch den zweiten Chip aus dem zweiten Signal;
- Speichern des zweiten kryptographischen Schlüssels (PS_B) als zweiten Referenzschlüssel in einem geschützten Speichermedium (106) des ersten Chips, wobei der zweite Referenzschlüssel und der zweite kryptographische Schlüssel ein symmetrisches kryptographisches Schlüsselpaar bilden, wobei der zweite Referenzschlüssel allein oder in Kombination mit dem ersten Referenzschlüssel als Personalisierungsmittel dient;
- nach der Speicherung des zweiten Referenzschlüssels, Löschen des zweiten kryptographischen Schlüssels von dem zweiten Chip.

16. Verfahren zur Personalisierung einer Chipkarte mit einer Chipkartenfunktion (128, 168) die von einem ersten (104) und/oder zweiten (154) Chip bereitgestellt wird, wobei der erste und der zweite Chip Bestandteil einer Chipkarte (102) sind, deren Kartenmaterial (171) den ersten und den zweiten Chip trägt, wobei durch das Kartenmaterial eine erste Physical Unclonable Function (PUF) bezüglich eines ersten Sensorelements (112) des ersten Chips gebildet wird, mit:
a1) Empfang eines ersten Signals (Sig I), das durch die erste Physical Unclonable Function bestimmt ist, durch das erste Sensorelement (112);
b1) Ableitung eines ersten kryptographischen Schlüssels (PS_A) durch den ersten Chip aus dem ersten Signal;
- Speichern des ersten kryptographischen Schlüssels (PS_A) als ersten Referenzschlüssel in einem geschützten Speichermedium (156) des zweiten Chips, wobei der erste Referenzschlüssel und der erste kryptographische Schlüssel ein symmetrisches kryptographisches Schlüsselpaar bilden, wobei der erste Referenzschlüssel als Personalisierungsmittel dient;
- nach der Speicherung des ersten Referenzschlüssels, Löschen des ersten kryptographischen Schlüssels, so dass dieser in keinem Speichermedium der Chipkarte oder des ersten oder zweiten Chips gespeichert ist;
und/oder
wobei durch das Kartenmaterial eine zweite Physical Unclonable Function bezüglich eines zweiten Sensorelements (162) des zweiten Chips gebildet wird und das Verfahren umfasst:
a2) Empfang eines zweiten Signals (Sig II) das durch die zweite Physical Unclonable Function bestimmt ist durch das zweite Sensorelement (162);
b2) Ableitung eines zweiten kryptographischen Schlüssels (PS_B) durch den zweiten Chip aus dem zweiten Signal;
- Speichern eines zweiten Referenzschlüssels (RS_B) in einem Speichermedium (106) des ersten Chips oder einem dem ersten Chip zugänglichen externen Speichermedium, wobei der zweite Referenzschlüssel und der zweite kryptographische Schlüssel ein asymmetrisches kryptographisches Schlüsselpaar bilden, wobei der zweite Referenzschlüssel als öffentlicher Schlüssel fungiert, wobei der zweite Referenzschlüssel allein oder in Kombination mit dem ersten Referenzschlüssel als Personalisierungsmittel dient;
- nach der Speicherung des zweiten Referenzschlüssels, Löschen des zweiten kryptographischen Schlüssels, so dass dieser in keinem Speichermedium der Chipkarte oder des ersten oder zweiten Chips gespeichert ist.

17. Chipkarte (102), umfassend:
- einen ersten Chip mit einem ersten Sensorelement (112);
- einen zweiten Chip, wobei der erste und/oder der zweite Chip zur Ausführung einer Chipkartenfunktion ausgebildet ist;
- Kartenmaterial welches den ersten und den zweiten Chip trägt, wobei durch das Kartenmaterial eine erste Physical Unclonable Function (PUF) bezüglich eines ersten Sensorelements (112) des ersten Chips gebildet wird;
- wobei das erste Sensorelement ausgebildet ist zum:
a1) Empfang eines ersten Signals (Sig I), das durch die erste Physical Unclonable Function bestimmt ist, durch das erste Sensorelement (112);
- wobei der erste Chip ausgebildet ist zu:
b1) Ableitung eines ersten kryptographischen Schlüssels (PS_A) durch den ersten Chip aus dem ersten Signal;
c1) Authentisierung gegenüber dem zweiten Chip mit Hilfe des ersten kryptographischen Schlüssels;
d) Aufbau einer kryptographisch geschützten Datenübertragungskanals zwischen erstem und zweiten Chip; und
e) Datenaustausch zwischen dem ersten und zweiten Chip über den Datenübertragungskanal zur Durchführung der Chipkartenfunktion.

## Claims

1. A method for executing a chip card function (128, 168) provided by a first (104) and/or second (154) chip, wherein the first and second chip are part of a chip card (102), of which the card material (171) carries the first and the second chip, wherein a first physical unclonable function PUF (401) with respect to a first sensor element (112) of the first chip is formed by the card material, said method comprising the following steps:
a1) receiving (302) a first signal (Sig I), which is determined by the first physical unclonable function, by the first sensor element (112);
b1) deriving (304) a first cryptographic key (PS_A) by the first chip from the first signal;
c1) authenticating (306) the first chip to the second chip with the aid of the first cryptographic key;
d) establishing (308) a cryptographically protected data transmission channel (210) between the first and second chip; and
e) exchanging data (310) between the first and second chip via the data transmission channel in order to execute the chip card function.

2. The method according to claim 1, wherein a second physical unclonable function with respect to a second sensor element (162) of the second chip is formed by the card material, said method further comprising the following steps:
a2) receiving a second signal (Sig II), which is determined by the second physical unclonable function (402), by the second sensor element (162);
b2) deriving a second cryptographic key (PS_B) by the second chip from the second signal;
c2) authenticating the second chip to the first chip with the aid of the second cryptographic key.

3. The method according to claim 2, wherein the cryptographically protected data transmission channel is established only following successful authentication of the first chip to the second chip and following successful authentication of the second chip to the first chip.

4. The method according to any one of the preceding claims, wherein a production or personalisation of the chip card comprises the following steps:
- executing steps a1-b1);
- storing the first cryptographic key (PS_A) as first reference key in a protected storage medium (156) of the second chip, wherein the first reference key and the first cryptographic key form a symmetric cryptographic key pair;
- following the storage of the first reference key, deleting the first cryptographic key from the first chip;
and/or
- executing steps a2-b2);
- storing the second cryptographic key (PS_B) as second reference key in a protected storage medium (106) of the first chip, wherein the second reference key and the second cryptographic key form a symmetric cryptographic key pair;
- following the storage of the second reference key, deleting the second cryptographic key from the second chip.

5. The method according to any one of preceding claims 1-3, wherein a production or personalisation of the chip card comprises the following steps:
- executing steps a 1-b1);
- storing a first reference key (RS_A) in a storage medium (156) of the second chip or in an external storage medium accessible by the second chip, wherein the first reference key and the first cryptographic key form an asymmetric cryptographic key pair, wherein the first reference key functions as a public key;
- following the storage of the first reference key, deleting the first cryptographic key so that this is not stored in any storage medium of the chip card or of the first or second chip;
and/or
- executing steps a2-b2);
- storing a second reference key (RS_B) in a storage medium (106) of the first chip or in an external storage medium accessible by the first chip, wherein the second reference key and the second cryptographic key form an asymmetric cryptographic key pair, wherein the second reference key functions as public key;
- following the storage of the second reference key, deleting the second cryptographic key so that this is not stored in any storage medium of the chip card or of the first or second chip.

6. The method according to any one of preceding claims 4-5,
- wherein the first chip for authentication signs a first data value ÖST2_B) with the first cryptographic key (PS_A), and wherein the signed first data value is transferred to the second chip for signature verification by the second chip by means of the first reference key; and/or
- wherein the second chip for authentication signs a second data value ÖST2_A) with the second cryptographic key (PS_B), and wherein the signed second data value is transmitted to the first chip for signature verification by the first chip by means of the second reference key.

7. The method according to any one of the preceding claims, wherein the authentication of the first chip to the second chip comprises the following steps:
- agreeing (200) domain parameters (DP) between the first and the second chip;
- generating a random value, which functions as first temporary private key (PST2_B), by the second chip;
- deriving a first temporary public key (ÖST2_B) from the first private temporary key and at least one of the domain parameters by the second chip, wherein the first temporary private and the first temporary public key form an asymmetric cryptographic key pair;
- transmitting the first temporary public key from the second chip to the first chip over the course of a first Diffie-Hellman key exchange;
- in response to the transmission of the first temporary public key, initiating the execution of steps a1-b1) and using the first cryptographic key by the first chip to sign the transmitted first temporary public key; and
- transmitting the signed first temporary public key (ÖST2_B_{SIGN_PS_A}) from the first chip to the second chip;
- verifying the signature of the signed first temporary public key with the aid of the first reference key (RS_A) by the second chip;
wherein the establishment of the cryptographically protected connection comprises the following steps:
- deriving a session key (SSYM) from the first temporary public key by the first chip for use of the session key to encrypt all data transmitted from the first chip via the cryptographically protected data transmission channel (210).

8. The method according to claim 7, wherein the authentication of the second chip to the first chip comprises the following steps:
- generating a further random value, which functions as second temporary private key (PST2_A), by the first chip;
- deriving a second temporary public key (ÖST2_A) from the second private temporary key and the at least one domain parameter by the first chip, wherein the second temporary private and the second temporary public key form an asymmetric cryptographic key pair;
- transmitting the second temporary public key from the first chip to the second chip during the course of the first Diffie-Hellman key exchange;
- in response to the transmission of the second temporary public key, initiating the execution of steps a2-b2) and using the second cryptographic key by the second chip to sign the transmitted second temporary public key; and
- transmitting the signed second temporary public key (ÖST2_A_{SIGN_PS_B}) from the second chip to the first chip;
- verifying the signature of the signed second temporary public key with the aid of the second reference key (RS_B) by the first chip;
wherein the establishment of the cryptographically protected connection comprises the following steps:
- deriving the session key (SSYM) from the second temporary public key by the second chip for use of the session key to encrypt all data transmitted from the second chip via the cryptographically protected data transmission channel.

9. The method according to any one of the preceding claims, wherein steps a1-c1 and/or a2-c2 are executed again for each execution of the chip card function.

10. The method according to any one of the preceding claims,
- wherein the first signal originates from a first signal source, wherein the first signal source and the first sensor are arranged relative to one another within the chip card such that, in the event of mechanical, electrical, thermal or chemical modification of the card material forming the first physical unclonable function, a data value different from the first cryptographic key is derived from the first signal,
and/or
- wherein the second signal originates from the first or a second signal source, wherein the signal source from which the second signal originates and the second sensor are arranged relative to one another within the chip card such that, in the event of mechanical, thermal or chemical modification of the card material forming the second physical unclonable function, a data value different from the second cryptographic key is derived from the second signal.

11. The method according to any one of the preceding claims,
- wherein material properties of the card material that determine the first and/or second PUF include: an imprint on the card; an inhomogeneous distribution of material properties; the size and/or position of particles within the card material forming the first and/or second physical unclonable function, and/or wherein the material properties include one or more of the following properties: i) electric, ii) dielectric, iii) magnetic, or iv) optical properties; and
- wherein the first and/or second signal is/are transmitted by i-ii) one or more electric field sources, or iii) one or more magnetic field sources, or iv) one or more light sources.

12. The method according to any one of the preceding claims, wherein the card material forming the first and/or second physical unclonable function is a card material which contains a multiplicity of chemoluminescent, phosphorescent or electroluminescent particles and/or inhomogeneities that in their totality form a first and/or second light source, wherein the rest of the card material is transparent at least for part of the frequency range emitted by the light source.

13. The method according to any one of the preceding claims, wherein a first signal source transmitting the first signal via the first physical unclonable function is part of the second chip, and/or wherein a second signal source transmitting the second signal via the first physical unclonable function is part of the first chip.

14. The method according to any one of the preceding claims, wherein the chip card function is executed by the second chip and the first chip is:
- a chip for receiving data from an input device; or
- a chip for outputting data; or
- a chip for sensing a physical, chemical or biological parameter.

15. A method for personalising a chip card with a chip card function (128, 168) provided by a first (104) and/or second (154) chip,
wherein the first and the second chip are part of a chip card (102), of which the card material (171) carries the first and the second chip, wherein a first physical unclonable function (PUF) with respect to a first sensor element (112) of the first chip is formed by the card material, said method comprising the following steps:
a1) receiving a first signal (Sig I), which is determined by the first physical unclonable function, by the first sensor element (112);
b1) deriving a first cryptographic key (PS_A) by the first chip from the first signal;
- storing the first cryptographic key (PS_A) as first reference key in a protected storage medium (156) of the second chip, wherein the first reference key and the first cryptographic key form a symmetric cryptographic key pair, and wherein the first reference key serves as a personalisation means;
- following the storage of the first reference key, deleting the first cryptographic key from the first chip;
and/or
wherein a second physical unclonable function with respect to a second sensor element (162) of the second chip is formed by the card material and the method comprises the following steps:
a2) receiving a second signal (Sig II), which is determined by the second physical unclonable function, by the second sensor element (162);
b2) deriving a second cryptographic key (PS_B) by the second chip from the second signal;
- storing the second cryptographic key (PS_B) as second reference key in a protected storage medium (106) of the first chip, wherein the second reference key and the second cryptographic key form a symmetric cryptographic key pair, wherein the second reference key serves as a personalisation means, either alone or in combination with the first reference key;
- following the storage of the second reference key, deleting the second cryptographic key from the second chip.

16. A method for personalising a chip card with a chip card function (128, 168) provided by a first (104) and/or second (154) chip,
wherein the first and the second chip are part of a chip card (102), of which the card material (171) carries the first and the second chip, wherein a first physical unclonable function (PUF) with respect to a first sensor element (112) of the first chip is formed by the card material, said method comprising the following steps:
a1) receiving a first signal (Sig I), which is determined by the first physical unclonable function, by the first sensor element (112);
b1) deriving a first cryptographic key (PS_A) by the first chip from the first signal;
- storing the first cryptographic key (PS_A) as first reference key in a protected storage medium (156) of the second chip, wherein the first reference key and the first cryptographic key form a symmetric cryptographic key pair, wherein the first reference key serves as a personalisation means;
- following the storage of the first reference key, deleting the first cryptographic key so that this is not stored in any storage medium of the chip card or of the first or second chip;
and/or
wherein a second physical unclonable function with respect to a second sensor element (162) of the second chip is formed by the card material and the method comprises the following steps:
a2) receiving a second signal (Sig II), which is determined by the second physical unclonable function, by the second sensor element (162);
b2) deriving a second cryptographic key (PS_B) by the second chip from the second signal;
- storing a second reference key (RS_B) in a storage medium (106) of the first chip or in an external storage medium accessible by the first chip, wherein the second reference key and the second cryptographic key form an asymmetric cryptographic key pair, wherein the second reference key serves as a personalisation means, either alone or in combination with the first reference key;
- following the storage of the second reference key, deleting the second cryptographic key from the second chip so that this is not stored in any storage medium of the chip card or of the first or second chip.

17. A chip card (102), comprising:
- a first chip having a first sensor element (112);
- a second chip, wherein the first and/or the second chip is configured to carry out a chip card function;
- card material which carries the first and the second chip, wherein a first physical unclonable function (PUF) with respect to a first sensor element (112) of the first chip is formed by the card material;
- wherein the first sensor element is configured to;
a1) receive a first signal (Sig I), which is determined by the first physical unclonable function, by the first sensor element (112);
- wherein the first chip is configured to:
b1) derive a first cryptographic key (PS_A) by the first chip from the first signal;
c1) authenticate itself to the second chip with the aid of the first cryptographic key;
d) establish a cryptographically protected data transmission channel between the first and second chip; and
e) exchange data between the first and second chip via the data transmission channel in order to execute the chip card function.

## Revendications

1. Procédé de mise en oeuvre d'une fonction de carte à puce (128, 168) qui est mise à disposition par une première puce (104) et/ou une deuxième puce (154), où les première et deuxième puces sont des constituants d'une carte à puce (102), dont le matériau de carte (171) supporte les première et deuxième puces, où une première fonction physique inclonable PUF (401) est formée par rapport à un premier élément de capteur (112) de la première puce, avec :
a1) la réception (302), par le premier élément de capteur (112), d'un premier signal (Sig I) qui est déterminé par la première fonction physique inclonable ;
b1) la dérivation (304) d'une première clé cryptographique (PS_A) par la première puce à partir du premier signal ;
c1) l'authentification (306) de la première puce par rapport à la deuxième puce à l'aide de la première clé cryptographique ;
d) la mise en place (308) d'un canal de transmission de données (210) protégé par cryptographie entre les première et deuxième puces ; et
e) l'échange de données (310) entre les première et deuxième puces par l'intermédiaire du canal de transmission de données pour la mise en oeuvre de la fonction de carte à puce.

2. Procédé selon la revendication 1, dans lequel, par le matériau de carte, une deuxième fonction physique inclonable par rapport à un deuxième élément de capteur (162) de la deuxième puce est formée, en outre avec :
a2) la réception d'un deuxième signal (Sig II) par lequel la deuxième fonction physique inclonable (402) est déterminée, par le deuxième élément de capteur (162) ;
b2) la dérivation d'une deuxième clé cryptographique (PS_B) par la deuxième puce à partir du deuxième signal ;
c2) l'authentification de la deuxième puce par rapport à la première puce à l'aide de la deuxième clé cryptographique.

3. "Procédé selon la revendication 2, dans lequel la mise en place du canal de transmission de données protégé par cryptographie est effectuée uniquement après une authentification réussie avec succès de la première puce par rapport à la deuxième puce et après une authentification réussie avec succès de la deuxième puce par rapport à la première puce.

4. Procédé selon l'une des revendications précédentes, dans lequel une mise en oeuvre ou une personnalisation de la carte à puce comprend les étapes suivantes :
- exécution des étapes a1 à b1) ;
- stockage de la première clé cryptographique (PS_A) en tant que première clé de référence dans un support de stockage (156) protégé de la deuxième puce, où la première clé de référence et la première clé cryptographique forment une paire symétrique de clés cryptographiques ;
- après le stockage de la première clé de référence, effacement de la première clé cryptographique de la première puce ;
et/ou
- exécution des étapes a2 à b2) ;
- stockage de la deuxième clé cryptographique (PS_B) en tant que deuxième clé de référence dans un support de stockage (106) protégé de la première puce, où la deuxième clé de référence et la deuxième clé cryptographique forment une paire symétrique de clés cryptographiques ;
- après le stockage de la deuxième clé de référence, effacement de la deuxième clé cryptographique de la deuxième puce.

5. Procédé selon l'une des revendications précédentes 1 à 3, dans lequel une mise en oeuvre ou une personnalisation de la carte à puce comprend les étapes suivantes :
- exécution des étapes a1 à b1) ;
- stockage de d'une première clé de référence (RS_A) dans un support de stockage (156) de la deuxième puce, ou dans un support de stockage externe accessible de la deuxième puce, où la première clé de référence et la première clé cryptographique forment une paire asymétrique de clés cryptographiques, où la première clé de référence fonctionne en tant que clé publique ;
- après le stockage de la première clé de référence, effacement de la première clé cryptographique de sorte que celle-ci est n'enregistrée dans aucun support de stockage de la carte à puce ou dans les première ou deuxième puces ;
et/ou
- exécution des étapes a2 à b2) ;
- stockage d'une deuxième clé de référence (RS_B) dans un support de stockage (106) de la première puce, ou dans un support de stockage externe accessible de la première puce, où la deuxième clé de référence et la deuxième clé cryptographique forment une paire asymétrique de clés cryptographiques, où la deuxième clé de référence fonctionne en tant que clé publique ;
- après le stockage de la deuxième clé de référence, effacement de la deuxième clé cryptographique de sorte que celle-ci est n'enregistrée dans aucun support de stockage de la carte à puce ou dans les première ou deuxième puces.

6. Procédé selon l'une des revendications précédentes 4 à 5,
- dans lequel la première puce signe pour l'authentification d'une première valeur de donnée (OST2_B) avec la première clé cryptographique (PS_A) et où la première valeur de donnée signée est transmise à la deuxième puce pour l'examen de la signature par la deuxième puce au moyen de la première clé de référence ; et/ou
- dans lequel la deuxième puce signe pour l'authentification d'une deuxième valeur de donnée (OST2_A) avec la deuxième clé cryptographique (PS_B) et où la deuxième valeur de donnée signée est transmise à la première puce pour l'examen de la signature par la première puce au moyen de la deuxième clé de référence.

7. Procédé selon l'une des revendications précédentes, dans lequel l'authentification de la première puce par rapport à la deuxième puce comprend :
- un accord (200) de paramètres de domaines (DP) entre les première et deuxième puces ;
- la génération d'une valeur aléatoire qui fonctionne en tant que première clé privée temporaire (PST2_B), par la deuxième puce ;
- la dérivation d'une première clé publique temporaire (OST2_B) à partir de la première clé privée temporaire et d'au moins un des paramètres de domaines par la deuxième puce, où la première clé privée temporaire et la première clé publique temporaire forment une paire asymétrique de clés cryptographiques ;
- la transmission de la première clé publique temporaire de la deuxième puce vers la première puce dans le cadre d'un premier échange de clés de Diffie-Hellman ;
- en réponse à la transmission de la première clé publique temporaire, l'initiation de l'exécution des étapes a1 à b1) et l'utilisation de la première clé cryptographique par la première puce pour la signature de la première clé publique temporaire transmise ; et
- la transmission de la première clé publique temporaire signée (OST2_B_{signPS_A}) de la première puce vers la deuxième puce ;
- l'examen de la signature de la première clé publique temporaire signée à l'aide de la première clé de référence (RS_A) par la deuxième puce ; où la mise en oeuvre de la liaison cryptographique protégée comprend :
- la dérivation d'une clé de session (SSYM) à partir de la première clé publique temporaire par la première puce pour l'utilisation de la clé de session pour le cryptage de toutes les données transmises de la première puce par l'intermédiaire du canal de transmission de données (210) protégé par cryptographie.

8. Procédé selon la revendication 7, dans lequel l'authentification de la deuxième puce par rapport à la première puce comprend :
- la génération d'une autre valeur aléatoire qui fonctionne en tant que deuxième clé privée temporaire (PST2_A), par la première puce ;
- la dérivation d'une deuxième clé publique temporaire (OST2_A) à partir de la deuxième clé privée temporaire et d'au moins un des paramètres de domaines par la première puce, où la deuxième clé privée temporaire et la deuxième clé publique temporaire forment une paire asymétrique de clés cryptographiques ;
- la transmission de la deuxième clé publique temporaire de la première puce vers la deuxième puce dans le cadre d'un premier échange de clés de Diffie-Hellman ;
- en réponse à la transmission de la deuxième clé publique temporaire, l'initiation de l'exécution des étapes a2 à b2) et l'utilisation de la deuxième clé cryptographique par la deuxième puce pour la signature de la deuxième clé publique temporaire transmise ; et
- la transmission de la deuxième clé publique temporaire signée (OST2_A_{signPS_B}) de la deuxième puce vers la première puce ;
- l'examen de la signature de la deuxième clé publique temporaire signée à l'aide de la deuxième clé de référence (RS_B) par la première puce ; où la mise en oeuvre de la liaison cryptographique protégée comprend :
- la dérivation d'une clé de session (SSYM) à partir de la deuxième clé publique temporaire par la deuxième puce pour l'utilisation de la clé de session pour le cryptage de toutes les données transmises de la deuxième puce par l'intermédiaire du canal de transmission de données protégé par cryptographie.

9. Procédé selon l'une des revendications précédentes, dans lequel les étapes a1 à c1 et/ou a2 à c2 sont de nouveau exécutées pour chaque mise en oeuvre de la fonction de la carte à puce.

10. Procédé selon l'une des revendications précédentes,
- dans lequel le premier signal provient d'une première source de signal, où la première source de signal et le premier capteur sont disposés relativement l'un par rapport à l'autre à l'intérieur de la carte à puce, que lors d'une modification du matériau de la carte d'ordre mécanique, électrique, thermique ou chimique, qui forme la première fonction physique inclonable, une autre donnée de valeur que la première clé cryptographique est dérivée du premier signal,
et/ou
- dans lequel le deuxième signal provient de la première ou d'une deuxième source de signal, où la source de signal d'où provient le deuxième signal et le deuxième capteur sont disposés de telle manière l'un par rapport à l'autre à l'intérieur de la carte à puce que, lors d'une modification du matériau de la carte d'ordre mécanique, électrique, thermique ou chimique, qui forme la deuxième fonction physique inclonable, une autre donnée de valeur que la deuxième clé cryptographique est dérivée du deuxième signal.

11. Procédé selon l'une des revendications précédentes,
- dans lequel des propriétés de matériau du matériau de carte, lesquelles déterminent les première et/ou deuxième PUF, comprennent : une expression sur la carte ; une distribution non homogène de propriétés de matériau ; la taille et/ou la position de particules à l'intérieur du matériau de carte, qui forme les première et/ou deuxième fonctions physiques inclonables et/ou les propriétés de matériau comprennent une ou plusieurs des propriétés suivantes : i) propriétés électriques, ii) diélectriques, iii) magnétiques, ou iv) optiques ; et
- dans lequel les premier et deuxième signaux sont émis respectivement par i à ii) une ou plusieurs sources de champ électriques ou iii) une ou plusieurs sources de champ magnétiques ou iv) une ou plusieurs sources lumineuses.

12. Procédé selon l'une des revendications précédentes, dans lequel il s'agit, dans le cas du matériau de la carte, qui forme les première et/ou deuxième fonctions physiques inclonables, d'un matériau de carte, lequel contient une multiplicité de particules chimioluminescentes, phosphorescentes ou électroluminescentes et/ou des inhomogénéités qui forment dans leur globalité une première et/ou une deuxième sources lumineuses, où le matériau de carte restant est transparent pour au moins une partie du domaine de fréquences émis par le source lumineuse.

13. Procédé selon l'une des revendications précédentes, dans lequel la première source de signal qui émet le premier signal par l'intermédiaire de la première fonction physique inclonable est une composante de la deuxième puce et/ou dans lequel la deuxième source de signal qui émet le deuxième signal par l'intermédiaire de la première fonction physique inclonable est un constituant de la première puce.

14. Procédé selon l'une des revendications précédentes, dans lequel la fonction de la carte de puce est mise en oeuvre par la deuxième puce et où il s'agit, que la première puce soit :
- une puce pour la réception de données provenant d'un appareil de saisie ; ou
- une puce pour l'émission de données ; ou
- une puce pour la détection d'un paramètre physique, chimique ou biologique.

15. Procédé pour la personnalisation d'une carte à puce avec une fonction de carte à puce (128, 168) qui est mise à disposition par une première (104) et/ou une deuxième puce (154), où les première et deuxième puces sont des composantes d'une carte à puce (102), dont le matériau de carte (171) porte les première et deuxième puces, où une première fonction physique inclonable (PUF) est formée par rapport à un premier élément de capteur (112) d'une première puce par le matériau de carte, avec :
a1) la réception d'un premier signal (Sig 1) qui est déterminé par la première fonction physique inclonable, par le premier élément de capteur (112) ;
b1) la dérivation d'une première clé cryptographique (PS_A) par la première puce à partir du premier signal ;
- le stockage de la première clé cryptographique (PS_A) en tant que première clé de référence dans un support de stockage (156) protégé de la deuxième puce, où la première clé de référence et la première clé cryptographique forment une paire symétrique de clés cryptographiques et où la première clé de référence sert de moyen de personnalisation ;
- après le stockage de la première clé de référence, l'effacement de la première clé cryptographique de la première puce ;
et/ou
où une deuxième fonction physique inclonable relative à un deuxième élément de capteur (162) de la deuxième puce est formé par le matériau de carte et où le procédé comprend :
a2) la réception d'un deuxième signal (Sig II) qui est déterminé par la deuxième fonction physique inclonable, par le deuxième élément de capteur (162) ; b2) la dérivation d'une deuxième clé cryptographique (PS_B) par la deuxième puce à partir du deuxième signal ;
- le stockage de la deuxième clé cryptographique (PS_B) en tant que deuxième clé de référence dans un support de stockage (106) protégé de la première puce, où la deuxième clé de référence et la deuxième clé cryptographique forment une paire symétrique de clés cryptographiques, où la deuxième clé de référence sert de moyen de personnalisation seule ou en combinaison avec la première clé de référence ;
- après le stockage de la deuxième clé de référence, l'effacement de la deuxième clé cryptographique de la deuxième puce.

16. Procédé de personnalisation d'une carte à puce avec une fonction de carte à puce (128, 168) qui est mise à disposition par une première (104) et/ou une deuxième puce (154), où les première et deuxième puces sont des composantes d'une carte à puce (102), dont le matériau de carte (171) porte les première et deuxième puces, où une première fonction physique inclonable (PUF) relative à un premier élément de capteur (112) de la première puce est formée par le matériau de carte ; avec :
a1) la réception d'un premier signal (Sig I), qui est déterminé par la première fonction physique inclonable, par le premier élément de capteur (112) ;
b1) la dérivation d'une première clé cryptographique (PS_A) par la première puce à partir du premier signal ;
- le stockage de la première clé cryptographique (PS_A) en tant que première clé de référence dans un support de stockage (156) protégé de la deuxième puce, où la première clé de référence et la première clé cryptographique forment une paire symétrique de clés cryptographiques, où la première clé de référence sert de moyen de personnalisation ;
- après le stockage de la première clé de référence, l'effacement de la première clé cryptographique de sorte que celle-ci n'est stockée dans aucun support de stockage de la carte à puce ou dans les première et deuxième puces ;
et/ou
dans lequel une deuxième fonction physique inclonable relative à un deuxième élément de capteur (162) de la deuxième puce est formée par le matériau de carte et le procédé comprend :
a2) la réception d'un deuxième signal (Sig II) qui est déterminé par la deuxième fonction physique inclonable, par le deuxième élément de capteur (162) ;
b1) la dérivation d'une deuxième clé cryptographique (PS_B) par la deuxième puce à partir du deuxième signal ;
- le stockage d'une deuxième clé de référence (RS_B) dans un support de stockage (106) protégé de la première puce ou dans un support de stockage externe accessible de la première puce, où la deuxième clé de référence et la deuxième clé cryptographique forment une paire asymétrique de clés cryptographiques, où la deuxième clé de référence sert de clé publique , où la deuxième clé de référence sert de moyen de personnalisation seule ou en combinaison avec la première clé de référence ;
- après le stockage de la deuxième clé de référence, l'effacement de la deuxième clé cryptographique de sorte que celle-ci n'est stockée dans aucun support de stockage de la carte à puce ou dans les première et deuxième puces.

17. Carte à puce (102), comprenant:
- une première puce avec un premier élément de capteur (112) ;
- une deuxième puce, où les première et/ou deuxième puces sont conçues pour la mise en oeuvre d'une fonction de carte à puce ;
- un matériau de carte, lequel porte les première et deuxième puces, où une première fonction physique inclonable (PUF) relative à un premier élément de capteur (112) de la première puce est formée par le matériau de carte ;
- où le premier élément de capteur est conçu pour :
a1) la réception d'un premier signal (Sig I) qui est déterminé par la première fonction physique inclonable, par le premier élément de capteur (112) ;
- où la première puce est conçue pour :
b1) la dérivation d'une première clé cryptographique (PS_A) par la première puce à partir du premier signal ;
c1) l'authentification par rapport à la deuxième puce à l'aide de la première clé cryptographique ;
d1 la mise en place d'un canal de transmission de données cryptographiques protégé entre les première et deuxième puces ; et
e) l'échange de données entre les première et deuxième puces par l'intermédiaire du canal de transmission de données pour la mise en oeuvre de la fonction de la carte à puce.
